# EUROPEAN PATENT APPLICATION

(11) **EP 4 186 821 A1**
(43) Date of publication of application: **31.05.2023**
(21) Application number: 21846045.9
(22) Date of filing: 20.07.2021
(51) Int. Cl.: B65G 1/04

(54) **ROBOT, CARGO HANDLING METHOD, SERVER AND WAREHOUSING SYSTEM**

(30) Priority: 24.07.2020 CN 202010725040
(71) Applicant: Hai Robotics Co., Ltd., Shenzhen, Guangdong 518000 (CN)
(72) Inventor: AI, Xin, Shenzhen, Guangdong 518000 (CN); CHEN, Yeguang, Shenzhen, Guangdong 518000 (CN); ZHUO, Shaokai, Shenzhen, Guangdong 518000 (CN)
(74) Representative: Gulde & Partner
(86) International application number: PCT/CN2021/107431
(87) International publication number: WO 2022/017396

(57) **Abstract**

This application provides a robot, a goods transferring method, a server, and a warehousing system The robot in this embodiment includes: a movable base, a robot shelving unit, a lifting device, and an object transferring device, where the robot shelving unit is mounted on the movable base; the movable base is configured to move to a first target object position included in a first transferring task and move to a second target object position included in a second transferring task, where one of the first transferring task and the second transferring task is a goods taking task, and the other one is a returning task; and the lifting device and the object transferring device are mounted on the robot shelving unit, and the robot is configured to perform the second carrying task during performance of the first carrying task. Therefore, a transferring policy may be flexibly set, and goods are returned while goods are taken during goods transferring, to effectively improve the goods transferring efficiency.

## Description

### CROSS-REFERENCE TO RELATED APPLICATIONS

This application claims priority to Chinese Patent Application No. 202010725040.8, entitled "ROBOT, GOODS TRANSFERRING METHOD, SERVER, AND WAREHOUSING SYSTEM", filed with the China National Intellectual Property Administration on July 24, 2020, which is incorporated herein by reference in its entirety.

### TECHNICAL FIELD

This application relates to the field of smart warehousing technologies, and in particular, to a robot, a goods transferring method, a server, and a warehousing system.

### BACKGROUND

With the rise and increasing development of e-commerce and online shopping, there is a huge development opportunity for the intelligence of warehousing and logistics of goods. In recent years, goods transferring technologies based on warehousing robots have become increasingly mature.

In the related art, after moving goods containers to an operating platform for operation, the warehousing robot further needs to put the goods containers back to a shelving unit region. For the warehousing robot that can transfer a plurality of goods containers at a time, a policy of "returning before taking" is generally adopted, that is, the goods containers that need to be put back to the shelving unit region are first put completely at one time, and then a task of transferring the goods containers to the operating platform is performed.

However, the above transferring method is not flexible enough and the goods transferring efficiency is relatively low.

### SUMMARY

This application provides a robot, a goods transferring method, a server, and a warehousing system, which can flexibly set a transferring policy, to improve the goods transferring efficiency.

According to a first aspect, this application provides a robot, including: a movable base, a robot shelving unit, a lifting device, and an object transferring device.

The robot shelving unit is mounted on the movable base.

The movable base is configured to move to a first target object position included in a first transferring task and move to a second target object position included in a second transferring task, where one of the first transferring task and the second transferring task is a goods taking task, and the other one is a returning task.

The lifting device and the object transferring device are mounted on the robot shelving unit, and the lifting device is configured to drive the object transferring device to move up or down relative to the robot shelving unit.

The object transferring device is configured to transfer a first target object between the robot shelving unit and the first target object position and transfer a second target object between the robot shelving unit and the second target object position.

The robot is configured to perform the second carrying task during performance of the first carrying task.

In some possible embodiments, when the second transferring task is the returning task, the movable base reaches a returning position during traveling to the first target object position; and the obj ect transferring device cooperates with the lifting device to transfer the second target object from the robot shelving unit to the returning position.

In some possible embodiments, the returning position is any one of an initial storage position of the second target object, a position of a vacant storage space, or a position of the first target object; and when the returning position is the position of the first target object, the object transferring device transfers the first target object to the robot shelving unit and then transfers the second target object to the position of the first target object.

In some possible embodiments, the object transferring device includes at least one transferring mechanism mounted on the robot shelving unit, and the transferring mechanism is configured to pick or place a target object.

In some possible embodiments, the object transferring device includes a suction-cup fork assembly and/or a machine-clamping arm.

In some possible embodiments, when the object transferring device includes at least two transferring mechanisms, the at least two transferring mechanisms are arranged in parallel or arranged in different layers in a lifting direction.

In some possible embodiments, when the at least two transferring mechanisms are arranged in parallel, the at least two transferring mechanisms are located on the robot shelving unit, and the at least two transferring mechanisms are an integrated structure.

In some possible embodiments, when the at least two transferring mechanisms are arranged in parallel, the robot shelving unit includes three or more columns arranged on the movable base in the same vertical plane; each transferring mechanism is mounted between two adjacent columns and moves up or down relative to the columns; and the transferring mechanisms are allowed or not allowed to move relative to each other.

In some possible embodiments, when the at least two transferring mechanisms are arranged in parallel, the lifting device includes two lifting assemblies, where the two lifting assemblies are respectively mounted on two opposing sides of the robot shelving unit, two ends of the object transferring device are respectively connected to the two lifting assemblies, and the two lifting assemblies drive the object transferring device to move up or down relative to the robot shelving unit.

In some possible embodiments, when the at least two transferring mechanisms are arranged in different layers in the lifting direction, the transferring mechanisms are allowed or not allowed to move relative to each other.

In some possible embodiments, when the at least two transferring mechanisms are arranged in different layers in the lifting direction, the at least two transferring mechanisms are located on the robot shelving unit, and the at least two transferring mechanisms are an integrated structure.

In some possible embodiments, when the at least two transferring mechanisms are arranged in different layers in the lifting direction, the lifting device includes two lifting assemblies, where the two lifting assemblies are respectively mounted on two opposing sides of the robot shelving unit, two ends of each of the transferring mechanisms are respectively connected to the two lifting assemblies, and the two lifting assemblies drive each of the transferring mechanisms to move up or down relative to the robot shelving unit.

In some possible embodiments, when there are two transferring mechanisms, one of at least one transferring mechanism is configured to transfer a target object on a warehouse shelving unit to the robot shelving unit, and the other one of at least one transferring mechanism is configured to move a target object on the robot shelving unit to the warehouse shelving unit.

In some possible embodiments, when the robot performs the goods taking task, the robot travels to a goods taking position of the first target object; and
one of the at least one transferring mechanism in the object transferring device moves to the goods taking position of the first target object through the lifting device and takes out the first target object from the warehouse shelving unit and then places the first target object on the robot shelving unit.

In some possible embodiments, after the goods taking task for the first target object is performed, one of the at least one transferring mechanism in the object transferring device moves the second target object on the robot shelving unit to the goods taking position of the first target object through the lifting device, and pushes the second target object to the goods taking position of the first target object.

In some possible embodiments, when the robot performs the returning task, the robot travels to a returning position of the second target object; and
one of the at least one transferring mechanism in the object transferring device moves the second target object on the robot shelving unit to the returning position of the second target object through the lifting device, and pushes the second target object to the returning position of the second target object.

In some possible embodiments, at least two storage spaces for storing the target objects are arranged on the robot shelving unit.

In some possible embodiments, each transferring mechanism includes a temporary storage tray and two telescopic arms oppositely arranged on the temporary storage tray in parallel, where inner arms of the telescopic arms include a transferring assembly, and the transferring assembly includes a push rod assembly and/or a clamping assembly.

According to a second aspect, this application provides a goods transferring method, applicable to the robot according to any one of the first aspect. Tthe method includes:
acquiring a transferring task sequence to perform the first transferring task; and
performing the second transferring task when the first transferring task is performed, where one of the first transferring task and the second transferring task is a goods taking task, and the other one is a returning task, and
the second transferring task is acquired during execution of the first transferring task, or the acquired transferring task sequence includes the second transferring task.

In some possible embodiments, the robot periodically or aperiodically reports at least one piece of information of position information and vacant slot information to a server.

In some possible embodiments, when receiving a requirement of a server, the robot reports at least one piece of information of position information and vacant slot information to the server.

In some possible embodiments, when the second transferring task is the returning task, the performing the second transferring task when the first transferring task is performed includes:
acquiring a first target object position from the first transferring task, and acquiring a returning position of a second target object from the second transferring task;
reaching the returning position of the second target object to perform the returning task during traveling to the first target object position; and
traveling to the first target object position to perform the goods taking task.

In some possible embodiments, the returning position of the second target object in the second transferring task includes:
an initial storage position of the second target object; or
a position of a vacant storage space; or
a position of the first target object.

In some possible embodiments, the acquiring a returning position of a second target object from the second transferring task includes:
acquiring positions corresponding to U vacant storage spaces from the second transferring task, where distances between the positions corresponding to the U vacant storage spaces and a goods taking path of the robot are within a first preset range, and/or distances between the positions corresponding to the U vacant storage spaces and the robot are within a second preset range; U is a natural number greater than 0; and the goods taking path is generated according to the position information and the first target object position included in the first transferring task.

In some possible embodiments, the acquiring a returning position of a second target object from the second transferring task includes:
acquiring positions corresponding to U vacant storage spaces from the second transferring task, where a first increased time generated when the robot returns goods according to the positions corresponding to the U vacant storage spaces is not greater than a first preset threshold, and/or a first movement distance increased when the robot returns goods according to the positions corresponding to the U vacant storage spaces is not greater than a second preset threshold; and U is a natural number greater than 0.

In some possible embodiments, when the second transferring task is the goods taking task, the performing the second transferring task when the first transferring task is performed includes:
acquiring a first target object position from the first transferring task, and acquiring a goods taking position of a second target object from the second transferring task;
reaching the goods taking position of the second target object to perform the goods taking task during traveling to the first target object position; and
traveling to the first target object position to perform the returning task.

In some possible embodiments, the acquiring a goods taking position of a second target object from the second transferring task includes:
acquiring goods taking positions of N second target objects from the second transferring task, where distances between the goods taking positions of the N second target objects and a returning path are within a third preset range, and/or distances between the goods taking positions of the N second target objects and the robot are within a fourth preset range; N is a natural number greater than 0; and the returning path is generated according to the position information and the first target object position included in the first transferring task.

In some possible embodiments, the acquiring a goods taking position of a second target object from the second transferring task includes:
acquiring goods taking positions of N second target objects from the second transferring task, where a second increased time generated when the robot takes goods according to the goods taking positions of the N second target objects is not greater than a third preset threshold, and/or a second movement distance increased when the robot takes goods according to the goods taking positions of the N second target objects is not greater than a fourth preset threshold, and N is a natural number greater than 0.

In some possible embodiments, the first transferring task and the second transferring task are related to any one or more of the following constraints:
a total moving duration for which the robot completes the goods taking task and the returning task;
a total quantity of times that a goods taking operation and a returning operation are performed when the robot completes the goods taking task and the returning task;
a total traveling distance by which the robot completes the goods taking task and the returning task; and
a goods loading rate when the robot completes the goods taking task and the returning task.

In some possible embodiments, when a shelving unit for placing goods has two or more storage positions in a depth direction of the shelving unit, and a target object position indicated by the goods taking task or the returning task is a second position or a position after the second position among the storage positions, the method further includes:
transferring non-target goods placed before the target object position to vacant slots of the robot;
performing the goods taking task or the returning task for the target object position; and
returning the non-target goods to an original storage position of the non-target goods on the shelving unit, or returning the non-target goods to a vacant storage position, where the vacant storage position and the target object position belong to a same shelving unit or different shelving units.

In some possible embodiments, the method further includes:
receiving a tally task allocated by the server, where the tally task includes: performing goods sorting on target objects, and/or adjusting storage positions of the target objects; and
performing the tally task, where an execution occasion of the tally task includes any one of the following cases:
   before the first transferring task and the second transferring task;
   between the first transferring task and the second transferring task;
   after the first transferring task and the second transferring task; and
   during execution of any task in a task sequence formed by the first transferring task and the second transferring task.

According to a third aspect, this application further provides a server, including:
a processor; and
a memory, configured to store executable instructions of the processor, where
the processor is configured to allocate a first transferring task and a second transferring task for the robot according to any one of the first aspect by executing the executable instructions.

According to a fourth aspect, this application provides a warehousing system, including: the robot according to any one of the first aspect, the server according to the third aspect, a shelving unit, and an operating platform, where the robot is communicatively connected to the server;
the server allocates the first transferring task and the second transferring task to the robot; and
the robot performs the goods transferring method according to any one of the second aspect, to implement goods transferring between the shelving unit and the operating platform.

According to a fifth aspect, an embodiment of this application further provides a storage medium, storing a computer program, where when the program is executed by a processor, the goods transferring method according to any one of the second aspect is implemented.

According to a sixth aspect, this application provides a goods transferring method, including:
acquiring position information and vacant slot information of a robot; and
allocating a second transferring task to the robot according to the position information, the vacant slot information, and a first target object position included in a first transferring task. One of the first transferring task and the second transferring task is a goods taking task, and the other one is a returning task.

In some possible embodiments, the second transferring task is allocated at any time point of before, during, and after execution of the first transferring task.

In some possible embodiments, a change of the vacant slot information when the robot performs the first transferring task is estimated, and the second transferring task is selectively sent before, during, or after the first transferring task.

In some possible embodiments, when the second transferring task is the returning task, the allocating a second transferring task to the robot includes:
determining a returning position of a second target object in the second transferring task according to the position information and the first target object position included in the first transferring task.

In some possible embodiments, the determining a returning position of a second target object in the second transferring task includes:
determining the returning position as an initial storage position of the second target object; or
determining the returning position as a position of the vacant storage space; or
determining the returning position as a position of the first target object.

In some possible embodiments, when the returning position is the position of the vacant storage space, the determining a returning position of a second target object in the second transferring task according to the position information and the first target object position included in the first transferring task includes:
generating a goods taking path according to the position information and the first target object position included in the first transferring task; determining each of positions corresponding to U vacant storage spaces whose distances to the goods taking path are within a first preset range as the returning position of the second target object, where U is a natural number greater than 0;
   and/or
determining each of positions corresponding to U vacant storage spaces whose distances to the robot are within a second preset range as the returning position of the second target object according to the position information, where U is a natural number greater than 0.

In some possible embodiments, when the returning position is the position of the vacant storage space, the determining a returning position of a second target object in the second transferring task according to the position information and the first target object position included in the first transferring task includes:
generating a goods taking path according to the position information and the first target object position included in the first transferring task;
predicting a first total consumed duration for which the robot separately reaches positions corresponding to V vacant storage spaces to return goods and takes the first target object according to the goods taking path, where V is a natural number not less than U, and U is a natural number greater than 0;
recording a difference between the first total consumed duration and a duration consumed when the robot takes the first target obj ect according to the goods taking path as a first increased time; and
determining each of U vacant storage spaces whose first increased time is not greater than a first preset threshold in the V vacant storage spaces as the returning position of the second target object.

In some possible embodiments, when the returning position is the position of the vacant storage space, the determining a returning position of a second target object in the second transferring task according to the position information and the first target object position included in the first transferring task includes:
generating a goods taking path according to the position information and the first target object position included in the first transferring task;
predicting a first movement distance increased when the robot separately reaches positions corresponding to V vacant storage spaces to return goods and takes the first target object according to the goods taking path, where V is a natural number not less than U, and U is a natural number greater than 0; and
determining each of U vacant storage spaces whose increased first movement distance is not greater than a second preset threshold in the V vacant storage spaces as the returning position of the second target object.

In some possible embodiments, when the second transferring task is the goods taking task, and a total quantity of vacant slots indicated by the vacant slot information of the robot is zero, the method further includes:
allocating at least one first transferring task before execution of the second transferring task.

In some possible embodiments, when the second transferring task is the goods taking task and the total quantity of vacant slots indicated by the vacant slot information of the robot is greater than zero, the allocating a second transferring task to the robot includes:
determining a goods taking position of a second target object in the second transferring task according to the position information, the vacant slot information, and the first target object position included in the first transferring task.

In some possible embodiments, the determining a goods taking position of a second target object in the second transferring task includes:
determining goods taking positions of N second target objects according to the position information and the first target object position included in the first transferring task, where N is a natural number greater than 0 but not greater than the total quantity of vacant slots indicated by the vacant slot information.

In some possible embodiments, the determining goods taking positions of N second target objects according to the position information and the first target object position included in the first transferring task includes:
generating a returning path according to the position information and the first target object position included in the first transferring task; determining N goods taking positions whose distances to the returning path are within a third preset range as the goods taking positions of the second target objects;
   and/or
determining N goods taking positions whose distances to the robot are within a fourth preset range as the goods taking positions of the second target objects according to the position information.

In some possible embodiments, the determining goods taking positions of N second target objects according to the position information and the first target object position included in the first transferring task includes:
generating a returning path according to the position information and the first target object position included in the first transferring task;
predicting a second total consumed duration for which the robot separately reaches M goods taking positions to take goods and returns the first target object according to the returning path, where M is a natural number not less than N;
recording a difference between the second total consumed duration and a duration consumed when the robot returns the first target object according to the returning path as a second increased time; and
determining N goods taking positions whose second increased time is not greater than a third preset threshold in the M goods taking positions as the goods taking positions of the second target objects.

In some possible embodiments, the determining goods taking positions of N second target objects according to the position information and the first target object position included in the first transferring task includes:
generating a returning path according to the position information and the first target object position included in the first transferring task;
predicting a second movement distance increased when the robot separately reaches M goods taking positions to take goods and returns the first target object according to the returning path, where M is a natural number not less than N; and
determining N goods taking positions whose increased second movement distance is not greater than a fourth preset threshold in the M goods taking positions as the goods taking positions of the second target objects.

In some possible embodiments, before the allocating a second transferring task to the robot, the method further includes:
determining whether a planned path corresponding to the second transferring task meets an appointment requirement, where the appointment requirement includes: no robot travels on the planned path within a preset time period.

In some possible embodiments, the method further includes:
re-allocating the second transferring task if the planned path does not meet the appointment requirement.

In some possible embodiments, the method further includes:
receiving a transferring task cancellation request or a new transferring task adding request sent by a client terminal; and
re-allocating the second transferring task according to the transferring task cancellation request or the new transferring task adding request.

In some possible embodiments, any one or more of the following constraints are considered when the first transferring task and the second transferring task are allocated:
a total moving duration for which the robot completes the goods taking task and the returning task;
a total quantity of times that a goods taking operation and a returning operation are performed when the robot completes the goods taking task and the returning task;
a total traveling distance by which the robot completes the goods taking task and the returning task; and
a goods loading rate when the robot completes the goods taking task and the returning task.

In some possible embodiments, when a shelving unit for placing goods has two or more storage positions in a depth direction of the shelving unit, and a target object position indicated by the goods taking task or the returning task is a second position or a position after the second position among the storage positions, the method further includes:
instructing the robot to transfer non-target goods placed before the target object position to vacant slots of the robot;
instructing the robot to perform the goods taking task or the returning task for the target object position; and
instructing the robot to return the non-target goods to an original storage position of the non-target goods on the shelving unit, or return the non-target goods to a vacant storage position, where the vacant storage positions and the target object position belongs to a same shelving unit or different shelving units.

In some possible embodiments, the method further includes:
allocating a tally task to the robot, where the tally task includes: performing goods sorting on target objects, and/or adjusting storage positions of the target objects, where
an execution occasion of the tally task includes any one of the following cases:
   before the first transferring task and the second transferring task;
   between the first transferring task and the second transferring task;
   after the first transferring task and the second transferring task; and
   during execution of any task in a task sequence formed by the first transferring task and the second transferring task.

According to a seventh aspect, this application provides a goods transferring method, including:
acquiring a transferring task sequence to perform a first transferring task; and
performing the second transferring task when the first transferring task is performed, where one of the first transferring task and the second transferring task is a goods taking task, and the other one is a returning task, and
the second transferring task is acquired during execution of the first transferring task, or the acquired transferring task sequence includes the second transferring task.

In some possible embodiments, the method further includes:
periodically or aperiodically reporting, by a robot, at least one piece of information of position information and vacant slot information to a server;
   and/or
reporting, by the robot when receiving a request indication of a server, at least one piece of information of position information and vacant slot information to the server.

In some possible embodiments, when the second transferring task is the returning task, the performing the second transferring task when the first transferring task is performed includes:
acquiring a first target object position from the first transferring task, and acquiring a returning position of a second target object from the second transferring task;
reaching the returning position of the second target object to perform the returning task during traveling to the first target object position; and
traveling to the first target object position to perform the goods taking task.

In some possible embodiments, the returning position of the second target object in the second transferring task includes:
an initial storage position of the second target object; or
a position of a vacant storage space; or
a position of the first target object.

In some possible embodiments, the acquiring a returning position of a second target object from the second transferring task includes:
acquiring positions corresponding to U vacant storage spaces from the second transferring task, where distances between the positions corresponding to the U vacant storage spaces and a goods taking path of the robot are within a first preset range, and/or distances between the positions corresponding to the U vacant storage spaces and the robot are within a second preset range; U is a natural number greater than 0; and the goods taking path is generated according to the position information and the first target object position included in the first transferring task.

In some possible embodiments, the acquiring a returning position of a second target object from the second transferring task includes:
acquiring positions corresponding to U vacant storage spaces from the second transferring task, where a first increased time generated when the robot returns goods according to the positions corresponding to the U vacant storage spaces is not greater than a first preset threshold, and U is a natural number greater than 0;
   and/or
acquiring positions corresponding to U vacant storage spaces from the second transferring task, where a first movement distance increased when the robot returns goods according to the positions corresponding to the U vacant storage spaces is not greater than a second preset threshold, and U is a natural number greater than 0.

In some possible embodiments, when the second transferring task is the goods taking task, the performing the second transferring task when the first transferring task is performed includes:
acquiring a first target obj ect position from the first transferring task, and acquiring a goods taking position of a second target object from the second transferring task;
reaching the goods taking position of the second target object to perform the goods taking task during traveling to the first target object position; and
traveling to the first target object position to perform the returning task.

In some possible embodiments, the acquiring a goods taking position of a second target object from the second transferring task includes:
acquiring goods taking positions of N second target objects from the second transferring task, where distances between the goods taking positions of the N second target objects and a returning path are within a third preset range; and the returning path is generated according to the position information and the first target object position included in the first transferring task;
   and/or
acquiring goods taking positions of N second target objects from the second transferring task, where distances between the goods taking positions of the N second target objects and the robot are within a fourth preset range; and the returning path is generated according to the position information and the first target object position included in the first transferring task.

In some possible embodiments, the acquiring a goods taking position of a second target object from the second transferring task includes:
acquiring goods taking positions of N second target objects from the second transferring task, where a second increased time generated when the robot takes goods according to the goods taking positions of the N second target objects is not greater than a third preset threshold, and N is a natural number greater than 0;
   and/or
acquiring goods taking positions of N second target objects from the second transferring task, where a second movement distance increased when the robot takes goods according to the goods taking positions of the N second target objects is not greater than a fourth preset threshold, and N is a natural number greater than 0.

In some possible embodiments, the first transferring task and the second transferring task are related to any one or more of the following constraints:
a total moving duration for which the robot completes the goods taking task and the returning task;
a total quantity of times that a goods taking operation and a returning operation are performed when the robot completes the goods taking task and the returning task;
a total traveling distance by which the robot completes the goods taking task and the returning task; and
a goods loading rate when the robot completes the goods taking task and the returning task.

In some possible embodiments, when a shelving unit for placing goods has two or more storage positions in a depth direction of the shelving unit, and a target object position indicated by the goods taking task or the returning task is a second position and a position after the second position among the storage positions, the method further includes:
transferring non-target goods placed before the target object position to a vacant slots of the robot;
performing the goods taking task or the returning task for the target object position; and
returning the non-target goods to an original storage position of the non-target goods on the shelving unit, or returning the non-target goods to a vacant storage position, where the vacant storage position and the target object position belong to a same shelving unit or different shelving units.

In some possible embodiments, the method further includes:
receiving a tally task allocated by the server, where the tally task includes: performing goods sorting on target objects, and/or adjusting storage positions of the target objects; and
performing the tally task, where an execution occasion of the tally task includes any one of the following cases:
   before the first transferring task and the second transferring task;
   between the first transferring task and the second transferring task;
   after the first transferring task and the second transferring task; and
   during execution of any task in a task sequence formed by the first transferring task and the second transferring task.

According to an eighth aspect, this application further provides a goods transferring device, configured to perform the goods transferring method according to any one of the first aspect, where the device includes:
an acquiring module, configured to acquire position information and vacant slot information of a robot; and
a processing module, configured to allocate a second transferring task to the robot according to the position information, the vacant slot information, and a first target object position included in a first transferring task, where one of the first transferring task and the second transferring task is a goods taking task, and the other one is a returning task.

According to a ninth aspect, this application provides a goods transferring device, configured to perform the goods transferring method according to any one of the second aspect, where the device includes:
a sending module, configured to acquire a transferring task sequence to perform a first transferring task; and
an execution module, configured to perform the second carrying task during performance of the first carrying task, where one of the first transferring task and the second transferring task is a goods taking task, and the other one is a returning task, and the second transferring task is acquired during execution of the first transferring task, or the acquired transferring task sequence includes the second transferring task.

According to a tenth aspect, this application further provides a server, including:
a processor; and
a memory, configured to store executable instructions of the processor, where
the processor is configured to perform the goods transferring method according to any one of the sixth aspect by executing the executable instructions.

According to an eleventh aspect, this application provides a transferring robot, including a robot body, where the robot body further includes: a memory and a processor, where the memory is configured to store executable instructions of the processor; and
the processor is configured to perform the goods transferring method according to any one of the seventh aspect by executing the executable instructions.

In some possible embodiments, the robot body includes a movable base, a robot shelving unit, a lifting device, and an object transferring device, where
the robot shelving unit is mounted on the movable base; the lifting device and the object transferring device are mounted on the robot shelving unit, and the lifting device is configured to drive the object transferring device to move up or down relative to the robot shelving unit; and
the object transferring device includes at least one transferring mechanism mounted on the robot shelving unit, and the transferring mechanism is configured to pick or place a target object.

In some possible embodiments, the object transferring device includes a suction-cup fork assembly.

In some possible embodiments, the object transferring device includes a machine-clamping arm.

In some possible embodiments, when the object transferring device includes at least two transferring mechanisms, the at least two transferring mechanisms are arranged in parallel on the robot shelving unit.

In some possible embodiments, the at least two transferring mechanisms are located in the same layer of the robot shelving unit and the at least two transferring mechanisms are an integrated structure.

In some possible embodiments, the robot shelving unit includes three or more columns arranged on the movable base in the same vertical plane; each transferring mechanism is mounted between two adjacent columns and moves up or down relative to the columns; and there is no relative movement between the transferring mechanisms in the same layer.

In some possible embodiments, when there are two transferring mechanisms, one of the transferring mechanisms is configured to transfer a target object on a warehouse shelving unit to the robot shelving unit, and the other one of the transferring mechanisms is configured to move a target object on the robot shelving unit to the warehouse shelving unit.

In some possible embodiments, each transferring mechanism includes a temporary storage tray and telescopic arms mounted on the temporary storage tray, where the temporary storage tray is configured to temporarily store the target object, and the telescopic arm is configured to push the target object on the temporary storage tray to the warehouse shelving unit and the robot shelving unit, or push the target object on the warehouse shelving unit or the robot shelving unit to the temporary storage tray.

In some possible embodiments, there are two telescopic arms, and the two telescopic arms are oppositely mounted on the temporary storage tray in parallel.

In some possible embodiments, each of the telescopic arms includes an outer arm, an inner arm, and a transferring assembly, where the outer arm is mounted on the temporary storage tray, the inner arm is mounted on the outer arm, the transferring assembly is mounted on the inner arm, and the inner arm is movable relative to the outer arm, so that the transferring assembly is configured to push the target object to move.

In some possible embodiments, the transferring assembly is a push rod assembly, and the push rod assembly includes first push rods and second push rods, where
the first push rods are mounted on the front end surface of the inner arm and are rotatable relative to the front end surface of the inner arm to horizontal or vertical positions, so that the first push rods push the target object on the warehouse shelving unit to the temporary storage tray or push the target object on the temporary storage tray to the warehouse shelving unit; and
the second push rods are mounted on the rear end surface of the inner arm and are rotatable relative to the rear end surface of the inner arm to horizontal or vertical positions, so that the second push rods push the target object on the temporary storage tray to the robot shelving unit or push the target object on the robot shelving unit to the temporary storage tray.

In some possible embodiments, the push rod assembly further includes a driving member, where the driving member is connected to the first push rod and the second push rod, and the driving member is configured to drive the first push rod and the second push rod to rotate relative to the end surfaces of the inner arm, so that the first push rod and the second push rod rotate to the horizontal or vertical positions.

In some possible embodiments, the transferring assembly is a clamping assembly, and the clamping assembly is set in the inner side of the inner arm, where
a clamping operation or a releasing operation is performed on the target object by adjusting opposite action forces on the clamping assembly or the telescopic arms.

In some possible embodiments, each of the telescopic arms further includes at least one middle arm, where the middle arm is mounted between the inner arm and the outer arm and is connected to the inner arm and the outer arm, the middle arm is movable relative to the outer arm, and the inner arm is movable relative to the middle arm.

In some possible embodiments, the lifting device includes two lifting assemblies, where the two lifting assemblies are respectively and oppositely mounted on two opposing sides of the robot shelving unit, two ends of the object transferring device are respectively connected to the two lifting assemblies, and the two lifting assemblies drive the object transferring device to move up or down relative to the robot shelving unit.

In some possible embodiments, each of the lifting assemblies includes a driving wheel, a driven wheel, and a transmission belt, where the driving wheel is mounted on the bottom end of the robot shelving unit, the driven wheel is mounted on the top end of the robot shelving unit, the transmission belt is sleeved on the driving wheel and the driven wheel, the driving wheel rotates to drive the transmission belt to move, and the transmission belt drives the two transferring mechanisms to move up or down relative to the robot shelving unit.

In some possible embodiments, at least two storage spaces for storing target objects are arranged on the robot shelving unit.

In some possible embodiments, when the transferring robot performs a returning task, the transferring robot travels to a returning position of a second target object; and
one of the at least one transferring mechanism in the object transferring device moves the second target object on the robot shelving unit to the returning position of the second target object through the lifting device, and pushes the second target object to the returning position of the second target object.

In some possible embodiments, when the transferring robot performs a goods taking task, the transferring robot travels to a goods taking position of a first target object; and
one of the at least one transferring mechanism in the object transferring device moves to the goods taking position of the first target object through the lifting device and takes out the first target object from the warehouse shelving unit and then places the first target object on the robot shelving unit.

In some possible embodiments, after the goods taking task for the first target object is performed, one of the at least one transferring mechanism in the object transferring device moves the second target object on the robot shelving unit to the goods taking position of the first target object through the lifting device, and pushes the second target object to the goods taking position of the first target object.

In some possible embodiments, the robot body includes: at least two transferring mechanisms mounted on the robot shelving unit, and the transferring mechanisms are mounted in different layers in a lifting direction, and the transferring mechanisms are respectively configured to pick or place target objects.

In some possible embodiments, when there are two transferring mechanisms, one of the transferring mechanisms is configured to transfer a target object on a warehouse shelving unit to the robot shelving unit, and the other one of the transferring mechanisms is configured to move a target object on the robot shelving unit to the warehouse shelving unit.

In some possible embodiments, each transferring mechanism includes a temporary storage tray and telescopic arms mounted on the temporary storage tray, where the temporary storage tray is configured to temporarily store the target object, and the telescopic arm is configured to push the target object on the temporary storage tray to the warehouse shelving unit and the robot shelving unit, or push the target object on the warehouse shelving unit or the robot shelving unit to the temporary storage tray.

In some possible embodiments, there are two telescopic arms, and the two telescopic arms are oppositely mounted on the temporary storage tray in parallel.

In some possible embodiments, each of the telescopic arms includes an outer arm, an inner arm, and a push rod assembly, where the outer arm is mounted on the temporary storage tray, the inner arm is mounted on the outer arm, the push rod assembly is mounted on the inner arm, and the inner arm is movable relative to the outer arm, so that the push rod assembly pushes the target object to move.

In some possible embodiments, the push rod assembly includes first push rods and second push rods, where
the first push rods are mounted on the front end surface of the inner arm and are rotatable relative to the front end surface of the inner arm to horizontal or vertical positions, so that the first push rods push the target object on the warehouse shelving unit to the temporary storage tray or push the target object on the temporary storage tray to the warehouse shelving unit; and
the second push rods are mounted on the rear end surface of the inner arm and are rotatable relative to the rear end surface of the inner arm to horizontal or vertical positions, so that the second push rods push the target object on the temporary storage tray to the robot shelving unit or push the target object on the robot shelving unit to the temporary storage tray.

In some possible embodiments, the push rod assembly further includes a driving member, where the driving member is connected to the first push rod and the second push rod, and the driving member is configured to drive the first push rod and the second push rod to rotate relative to the end surfaces of the inner arm, so that the first push rod and the second push rod rotate to the horizontal or vertical positions.

In some possible embodiments, each of the telescopic arms further includes at least one middle arm, where the middle arm is mounted between the inner arm and the outer arm and is connected to the inner arm and the outer arm, the middle arm is movable relative to the outer arm, and the inner arm is movable relative to the middle arm.

In some possible embodiments, the at least two transferring mechanisms are fixedly connected into a whole by connection plates.

In some possible embodiments, the lifting device includes two lifting assemblies, where the two lifting assemblies are respectively and oppositely mounted on two opposing sides of the robot shelving unit, two ends of each of the transferring mechanisms are respectively connected to the two lifting assemblies, and the two lifting assemblies drive the transferring mechanisms to move up or down relative to the robot shelving unit.

In some possible embodiments, each of the lifting assemblies includes a driving wheel, a driven wheel, and a transmission belt, where the driving wheel is mounted on the bottom end of the robot shelving unit, the driven wheel is mounted on the top end of the robot shelving unit, the transmission belt is sleeved on the driving wheel and the driven wheel, the driving wheel rotates to drive the transmission belt to move, and the transmission belt drives the two transferring mechanisms to move up or down relative to the robot shelving unit.

In some possible embodiments, at least two storage spaces for storing the target objects are arranged on the robot shelving unit.

In some possible embodiments, the robot body further includes: a support beam, where the support beam is mounted on the robot shelving unit and is movable up or down relative to the robot shelving unit; and
the transferring mechanisms are mounted on the support beam.

In some possible embodiments, the robot body further includes a mounting frame and a rotary assembly mounted on the mounting frame, where the transferring mechanisms are mounted on the rotary assembly, the mounting frame is mounted on the support beam, and the rotary assembly is configured to drive the transferring mechanisms to rotate within a plane perpendicular to a lifting direction of the support beam.

In some possible embodiments, the mounting frame includes two mounting plates that are set opposite to each other and a bearing beam that connects the two mounting plates, where the two mounting plates are connected to the support beam; and
the rotary assembly includes a bearing plate mounted on the bearing beam, a rotation plate spaced apart from the bearing plate, and a cross bearing configured to connect the bearing plate and the rotation plate, where the cross bearing is connected to a first chain wheel, the rotation plate is provided with a second chain wheel and a motor that drives the second chain wheel to rotate, the first chain wheel and the second chain wheel are connected by a chain, when the motor drives the second chain wheel to rotate, the second chain wheel drives the first chain wheel to rotate through the chain, and the first chain wheel drives the transferring mechanisms on the rotation plate to rotate around an axis of the first chain wheel during rotation.

In some possible embodiments, when the transferring robot performs a returning task, the transferring robot travels to a returning position of a second target object; and
one of the at least one transferring mechanism moves the second target object on the robot shelving unit to the returning position of the second target object through the lifting device, and pushes the second target object to the returning position of the second target object.

In some possible embodiments, when the transferring robot performs a goods taking task, the transferring robot travels to a goods taking position of a first target object; and
one of the at least one transferring mechanism moves to the goods taking position of the first target object through the lifting device and takes out the first target object from the warehouse shelving unit and then places the first target object on the robot shelving unit.

In some possible embodiments, after the goods taking task for the first target object is performed, one of the at least one transferring mechanism moves the second target object on the robot shelving unit to the goods taking position of the first target object through the lifting device, and pushes the second target object to the goods taking position of the first target object.

According to a twelfth aspect, this application further provides a warehousing system, including: a transferring robot, a server, a shelving unit, and an operating platform, where the transferring robot is communicatively connected to the server;
the server is configured to perform the goods transferring method according to any one of the sixth aspect; and
the transferring robot is configured to perform the goods transferring method according to any one of the seventh aspect, to implement goods transferring between the shelving unit and the operating platform.

According to a thirteenth aspect, an embodiment of this application further provides a storage medium, storing a computer program, where when the program is executed by a processor, the goods transferring method according to any one of the sixth aspect is implemented.

According to a fourteenth aspect, an embodiment of this application further provides a storage medium, storing a computer program, where when the program is executed by a processor, the goods transferring method according to any one of the seventh aspect is implemented.

This application provides a robot, a goods transferring method, a server, and a warehousing system, where the robot that includes a movable base, a robot shelving unit, a lifting device, and an object transferring device is set, the robot shelving unit is mounted on the movable base; the movable base is configured to move to a first target object position included in a first transferring task and move to a second target object position included in a second transferring task, where one of the first transferring task and the second transferring task is a goods taking task, and the other one is a returning task; and the lifting device and the object transferring device are mounted on the robot shelving unit, and the robot is configured to perform the second carrying task during performance of the first carrying task. Therefore, a transferring policy may be flexibly set, so that the robot can return goods while taking goods, to improve the rationality of path planning and reduce the entire operation time and movement distance of the robot, thereby not only saving energy, but also effectively improving the goods transferring efficiency.

### BRIEF DESCRIPTION OF THE DRAWINGS

To describe the technical solutions of the embodiments of this application or the existing technology more clearly, the following briefly introduces the accompanying drawings required for describing the embodiments or the existing technology. Apparently, the accompanying drawings in the following description show some embodiments of this application, and a person of ordinary skill in the art may still derive other drawings from these accompanying drawings without creative efforts.
FIG. 1 is a diagram of an application scenario of a goods transferring method according to an embodiment of this application.
FIG. 2 is a schematic flowchart of a goods transferring method according to a first embodiment of this application.
FIG. 3 is a schematic flowchart of a goods transferring method according to a second embodiment of this application.
FIG. 4 is a schematic flowchart of a goods transferring method according to a third embodiment of this application.
FIG. 5 is a schematic flowchart of a goods transferring method according to a fourth embodiment of this application.
FIG. 6 is a schematic structural diagram of a goods transferring device according to a fifth embodiment of this application.
FIG. 7 is a schematic structural diagram of a goods transferring device according to a sixth embodiment of this application.
FIG. 8 is a schematic structural diagram of a server according to a seventh embodiment of this application.
FIG. 9 is a schematic structural diagram of a robot according to an embodiment of this application.
FIG. 10 is a first schematic structural diagram of a robot according to an embodiment of this application.
FIG. 11 is a second schematic structural diagram of a robot according to an embodiment of this application.
FIG. 12 is a third schematic structural diagram of a robot according to an embodiment of this application.
FIG. 13 is a fourth schematic structural diagram of a robot according to an embodiment of this application.
FIG. 14 is a fifth schematic structural diagram of a robot according to an embodiment of this application.
FIG. 15 is a sixth schematic structural diagram of a robot according to an embodiment of this application.

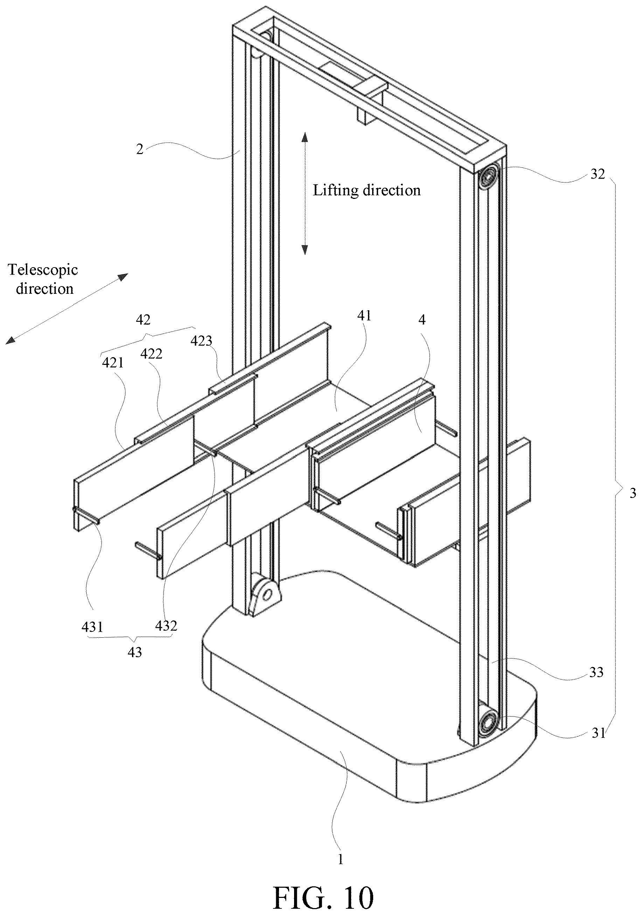

Descriptions of reference numerals in FIG. 10 to FIG. 15:
1-movable base;
2-robot shelving unit;
21-storage space;
3-lifting assembly;
31-driving wheel;
32-driven wheel;
33-transmission belt;
4-transferring mechanism;
41-temporary storage tray;
42-telescopic arm;
421-inner arm;
422-middle arm;
423-outer arm;
43-push rod assembly;
431-first push rod; and
432-second push rod.

### DETAILED DESCRIPTION

In order to make objectives, technical solutions, and advantages of embodiments of this application clearer, the technical solutions in the embodiments of this application will be clearly and completely described in the following with reference to the accompanying drawings. Apparently, the embodiments to be described are a part rather than all of the embodiments of this application. All other embodiments obtained by persons of ordinary skill in the art based on the embodiments of this application without creative efforts shall fall within the protection scope of this application.

With the rise and increasing development of e-commerce and online shopping, there is a huge development opportunity for the intelligence of warehousing and logistics of goods. In recent years, goods transferring technologies based on warehousing robots have become increasingly mature. In the prior art, after moving goods containers to an operating platform for operation, the warehousing robot further needs to put the goods containers back to a shelving unit region. For the warehousing robot that can transfer a plurality of goods containers at a time, a policy of "returning before taking" is generally adopted: that is, the goods containers that need to be put back to the shelving unit region are first put completely at one time, and then a task of transferring the goods containers to the operating platform is performed. However, the above transferring method is not flexible enough and the goods transferring efficiency is relatively low.

For the technical problems, the goods transferring method and the warehousing system provided in this application can flexibly set a transferring policy to improve the goods transferring efficiency.

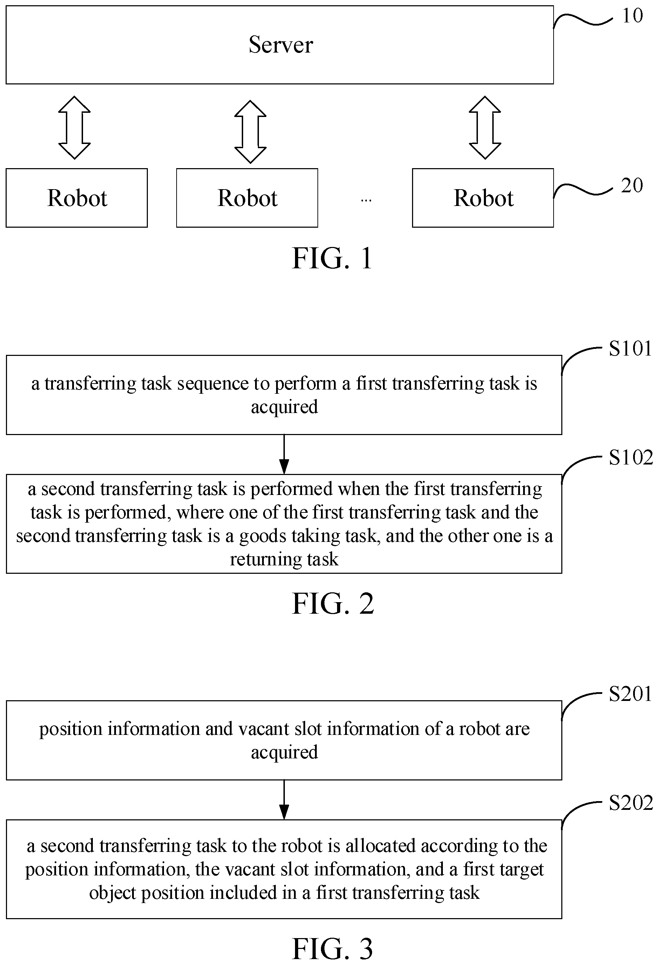

FIG. 1 is a diagram of an application scenario of a goods transferring method according to an embodiment of this application. As shown in FIG. 1, a server 10 and a robot 20 are included, and the robot 20 is communicatively connected to the server 10. The robot 20 may receive an instruction delivered by the server 10 to perform goods transferring between a shelving unit and an operating platform. When performing a returning task, the robot 20 may also perform a goods taking task. A returning position corresponding to at least one returning task of the transferring robot 20 includes any one of the following positions: an initial storage position of to-be-returned goods; a position corresponding to a vacant storage space; and a storage position corresponding to to-be-taken goods. In this embodiment, the server 10 may generate an initial planned path based on a current position of the robot 20 and the returning position and a returning sequence that correspond to the at least one returning task of the robot 20; then determine whether a goods taking task may be sent to the robot 20 during performance of the returning tasks, determine at least one target object from the to-be-taken goods if a preset condition is met, and generate a target planned path. The robot 20 may receive the target planned path sent by the server 10 and travel according to the planned path to perform the goods taking task and the returning task.

It should be noted that, in this embodiment, the server may be communicatively connected to a plurality of robots, and simultaneously acquires positions and task lists of the plurality of robots, generates corresponding target planned paths, and sends the target planned paths to the corresponding robots.

FIG. 2 is a schematic flowchart of a goods transferring method according to a first embodiment of this application. As shown in FIG. 2, the goods transferring method provided in this embodiment may include the following operations:
In block S101: a transferring task sequence to perform a first transferring task is acquired.

In this embodiment, a server may be communicatively connected to a plurality of robots through wireless signals. The server is configured to allocate a first transferring task to the robot. After receiving the first transferring task, the robot reports real-time position information and vacant slot information of the robot to the server. In this embodiment, the first transferring task is not limited, and the first transferring task may be a goods taking task or may be a returning task.

In this embodiment, the server may simultaneously allocate second transferring tasks to the plurality of different robots. The robots receive the second transferring tasks through communication apparatuses of the robots.

In block S102: a second transferring task is performed when the first transferring task is performed, where one of the first transferring task and the second transferring task is a goods taking task, and the other one is a returning task.

In block S102, the second transferring task is acquired when the first transferring task is performed, or the acquired transferring task sequence includes the second transferring task. For example, there may be two cases. The first case is that the first transferring task is the goods taking task and the second transferring task is the returning task; and the second case is that the first transferring task is the returning task and the second transferring task is the goods taking task. The following respectively describes the first case and the second case in detail.

For example, when the second transferring task is the returning task, the robot first acquires a first target object position from the first transferring task, and acquires a returning position of a second target object from the second transferring task; then reaches the returning position of the second target object to perform the returning task during traveling to the first target object position; and finally travels to the first target object position to perform the goods taking task. The returning position of the second target object in the second transferring task is any one of an initial storage position of the second target object, a position of a vacant storage space, and a position of a first target object.

In a first optional implementation, the robot acquires positions corresponding to U vacant storage spaces from the second transferring task, where distances between the positions corresponding to the U vacant storage spaces and a goods taking path of the robot are within a first preset range, and U is a natural number greater than 0; and the goods taking path is generated according to the position information and the first target object position included in the first transferring task.

In this embodiment, a vacant storage space that meets a requirement is selected according to the distances between the vacant storage spaces and the goods taking path, and a position corresponding to a vacant storage space whose distance to the goods taking path is within a preset range is used as the returning position of the second target object. Therefore, a relatively close vacant storage space may be selected for the robot to return goods, to reduce the traveling distance of the robot when performing the second transferring task.

In a second optional implementation, the robot acquires positions corresponding to U vacant storage spaces from the second transferring task, where distances between the positions corresponding to the U vacant storage spaces and the robot are within a second preset range, and U is a natural number greater than 0; and the goods taking path is generated according to the position information and the first target obj ect position included in the first transferring task.

In a third optional implementation, the robot acquires positions corresponding to U vacant storage spaces from the second transferring task, where a first increased time generated when the robot returns goods according to the positions corresponding to the U vacant storage spaces is not greater than a first preset threshold, and U is a natural number greater than 0.

In this embodiment, a vacant storage space is selected according to an increased time for which the robot reaches the vacant storage spaces to perform the returning tasks and performs the goods taking tasks according to the goods taking path. A position corresponding to a vacant storage space whose increased time is within a preset range is used as the returning position of the second target object. Therefore, a vacant storage space that takes a relatively short time may be selected for the robot to return goods, to reduce the time consumed when the robot performs the second transferring task.

In a fourth optional implementation, the robot acquires positions corresponding to U vacant storage spaces from the second transferring task, where a first movement distance increased when the robot returns goods according to the positions corresponding to the U vacant storage spaces is not greater than a second preset threshold, and U is a natural number greater than 0.

It should be noted that, a quantity of returning tasks is not limited in this embodiment, and the robot may perform a plurality of returning tasks simultaneously. During execution of the returning task, a plurality of policies may be arranged for the returning position. One policy is taking and returning at the same place. Each of goods corresponds to a fixed storage position, and this mode can facilitate warehouse management. Therefore, during execution of the returning task, the returning position is an initial storage position of to-be-returned goods. The other policy is storing at an empty position. The to-be-returned goods may be placed at any vacant storage space, and this mode has greater flexibility. Therefore, during execution of the returning task, the returning position is a position corresponding to a vacant storage space. Another special case of this mode is that the goods taking task and the returning task may be combined, that is, storage spaces of to-be-returned goods and to-be-taken goods are exchanged. In this case, the returning position is a storage position corresponding to the to-be-taken goods.

For example, when the second transferring task is the goods taking task, the robot first acquires a first target obj ect position from the first transferring task, and acquires a goods taking position of a second target object from the second transferring task; then reaches the goods taking position of the second target object to perform the goods taking task during traveling to the first target object position; and finally travels to the first target object position to perform the returning task.

In a first optional implementation, the robot acquires goods taking positions of N second target objects from the second transferring task, where distances between the goods taking positions of the N second target objects and a returning path are within a third preset range; and the returning path is generated according to the position information and the first target object position included in the first transferring task.

In this embodiment, a goods taking position that meets a requirement is selected according to the distances between goods taking positions of to-be-taken goods and the returning path, and the goods taking position whose distance to the returning path is within a preset range is used as the goods taking position of the second target object. Therefore, a relatively close goods taking task may be received for the robot, to reduce the traveling distance of the robot when performing the second transferring task.

In a second optional implementation, the robot acquires goods taking positions of N second target objects from the second transferring task, where distances between the goods taking positions of the N second target objects and the robot are within a fourth preset range; and the returning path is generated according to the position information and the first target object position included in the first transferring task.

In a third optional implementation, the robot acquires goods taking positions of N second target objects from the second transferring task, where a second increased time generated when the robot takes goods according to the goods taking positions of the N second target objects is not greater than a third preset threshold, and N is a natural number greater than 0.

In this embodiment, the goods taking position is selected according to an increased time for which the robot reaches the goods taking positions to perform the goods taking tasks and performs the returning tasks according to the returning path. A goods taking position whose increased time is within a preset range is used as the goods taking position of the second target object. Therefore, a goods taking task that takes a relatively short time may be received for the robot, to reduce the time consumed when the robot performs the second transferring task.

In a fourth optional implementation, the robot acquires goods taking positions of N second target objects from the second transferring task, where a second movement distance increased when the robot takes goods according to the goods taking positions of the N second target objects is not greater than a fourth preset threshold, and N is a natural number greater than 0.

Specifically, when the first transferring task is the goods taking task, and the second transferring task is the returning task, the server generates the goods taking path according to a current position of the robot and a current goods taking position of the robot; and then sends one or more returning tasks during performance of the goods taking task, to perform the operation of taking while returning. During specific operation, all vacant storage spaces whose distances to the goods taking path are within the preset range may be acquired, and then the most convenient vacant storage space that takes a shortest time is determined as a returning position corresponding to to-be-returned goods. A special case of this mode is that after the goods taking task is performed, the goods taking position also becomes a vacant storage space. Therefore, if the robot has a vacant slot when taking goods, the robot may directly perform a goods taking operation, and return, after taking the goods, to-be-returned goods on the robot to the vacant storage space vacated after the goods taking task is completed, that is, exchanges the storage spaces of the two goods. In this case, the robot does not need to perform extra movement, and the second increased time is the shortest. In addition, when the robot has no vacant slot, the robot may first find a vacant storage space to return goods. In this case, the robot has the vacant slot, and then exchanges storage spaces of to-be-taken goods and to-be-returned goods according to the foregoing embodiments.

For example, the first transferring task and the second transferring task performed by the robot are further related to any one or more of the following constraints: a total moving duration for which the robot completes the goods taking task and the returning task; a total quantity of times that a goods taking operation and a returning operation are performed when the robot completes the goods taking task and the returning task; a total traveling distance by which the robot completes the goods taking task and the returning task; and a goods loading rate when the robot completes the goods taking task and the returning task.

Specifically, when generating planned paths corresponding to the first transferring task and the second transferring task, the server may generate optimal paths according to the moving duration, the total quantity of times that the goods taking operation and the returning operation are performed, the traveling distance, the goods loading rate, and the like. Because goods are placed in a stereoscopic warehouse, both the plane position and the height (the goods position) are considered. During path planning, both a traveling time of the path and a lifting time of a fork need to be considered. The height of the fork may be adjusted during traveling of the robot, and the overall time for which the robot reaches a position of a target shelving unit and the fork reaches a specified position is the shortest. If a more optimized path (for example, a shorter distance or a shorter time) is found, the current path is updated, and a new planned path is generated.

For example, when a shelving unit for placing goods has two or more second positions in a depth direction of the shelving unit, and a target object position indicated by the goods taking task or the returning task is a second position or a position after the second position among the second positions, the robot transfers non-target goods placed before the target object position to a vacant slot of the robot; then performs the goods taking task or the returning task for the target object position; and finally returns the non-target goods to an original storage position of the non-target goods on the shelving unit, or returns the non-target goods to the vacant storage position, where the vacant storage position and the target object position belong to a same shelving unit or different shelving units.

The technical solution in the foregoing embodiments is applicable to a case that the shelving unit has a plurality of storage positions in the depth direction of the shelving unit, that is, a case that a plurality of target objects may be placed at the same position indicated in the horizontal and vertical directions on the shelving unit. In the foregoing embodiments, the server or the robot may determine the storage positions in the depth position of the shelving unit, that is, when performing the goods taking task and/or the returning task, the robot may be accurate to the target object position determined in the three directions (the horizontal direction, the vertical direction, and the depth direction), and then perform the goods taking task and/or the returning task for the target object position.

For example, the server may further allocate a tally task to the robot, where the tally task includes: performing goods sorting on target objects, and/or adjusting storage positions of the target objects.

In the foregoing embodiments, the server may further allocate a tally task to the robot, where the tally task is used for performing goods sorting on the target objects, and/or adjusting the storage positions of the target objects. For example, a quantity of target objects and positions of the target objects are counted. It should be noted that, a specific execution occasion for which the robot performs the tally task is not limited in this embodiment. The execution occasion of the tally task includes any one of the following cases:
before the first transferring task and the second transferring task;
between the first transferring task and the second transferring task;
after the first transferring task and the second transferring task; and
during execution of any task in a task sequence formed by the first transferring task and the second transferring task.

In this embodiment, the position information and the vacant slot information are reported to the server during execution of the first transferring task; the second transferring task allocated by the server is received, where one of the first transferring task and the second transferring task is a goods taking task, and the other one is a returning task; and the second transferring task is performed when the first transferring task is performed. Therefore, the transferring policy may be flexibly set, and goods are returned while goods are taken during goods transferring, to effectively improve the goods transferring efficiency.

FIG. 3 is a schematic flowchart of a goods transferring method according to a second embodiment of this application. As shown in FIG. 3, the goods transferring method provided in this embodiment may include the following operations:
In block S201: position information and vacant slot information of a robot are acquired.

In this embodiment, a server may be communicatively connected to a plurality of robots through wireless signals. The server is configured to allocate a first transferring task to the robot. After receiving the first transferring task, the robot reports real-time position information and vacant slot information of the robot to the server. In this embodiment, the first transferring task is not limited, and the first transferring task may be a goods taking task or may be a returning task.

It should be noted that, an occasion of allocating a second transferring task is not limited in this embodiment. The server may allocate the second transferring task to the robot at any time point before, during, or after execution of the first transferring task.

The first case is that the server first allocates the first transferring task and the second transferring task to the robot according to the position information and the vacant slot information of the robot. In this case, a task sequence is first generated, where the task sequence includes the first transferring task and the second transferring task that are interleaved. After receiving the task sequence, the robot sequentially performs the first transferring task and the second transferring task according to the task sequence.

The second case is that the server dynamically allocates the second transferring task to the robot, that is, when the robot performs the first transferring task, the second transferring task is received before the first transferring task. On the way to perform the first transferring task, the robot performs the second transferring task by the way.

The third case is that the server dynamically allocates the second transferring task to the robot, and after performing the first transferring task, the robot performs the second transferring task subsequently.

In block S202: a second transferring task to the robot is allocated according to the position information, the vacant slot information, and a first target object position included in a first transferring task.

A second target object position included in the second transferring task is adjacent or close to the first target object position.

In this embodiment, after receiving the position information and the vacant slot information reported by the robot, the server generates a planned path of the first transferring task according to the position information, the vacant slot information, and the first target object position included in the first transferring task; and then allocates the second transferring task to the robot according to a goods taking request or a goods returning request sent by a client. It should be noted that, one of the first transferring task and the second transferring task is a goods taking task, and the other one is a returning task. That is, the robot may return goods while taking goods during goods transferring, to effectively improve the goods transferring efficiency.

For example, when the second transferring task is the returning task, the server determines a returning position of a second target object in the second transferring task according to the position information and the first target object position included in the first transferring task. The returning position of the second target object is any one of an initial storage position of the second target object, a position of a vacant storage space, or a position of a first target object.

In a first optional implementation, when the returning position is the position of the vacant storage space, the server first generates a goods taking path according to the position information and the first target object position included in the first transferring task; and determines each of positions corresponding to U vacant storage spaces whose distances to the goods taking path are within a first preset range as the returning position of the second target object, where U is a natural number greater than 0.

In a second optional implementation, when the returning position is the position of the vacant storage space, the server determines each of positions corresponding to U vacant storage spaces whose distances to the robot are within a second preset range as the returning position of the second target object, where U is a natural number greater than 0.

In this embodiment, a vacant storage space that meets a requirement is selected according to the distances between the vacant storage spaces and the goods taking path, and a position corresponding to a vacant storage space whose distance to the goods taking path is within a preset range is used as the returning position of the second target object. Therefore, a relatively close vacant storage space may be selected for the robot to return goods, to reduce the traveling distance of the robot when performing the second transferring task.

In a third optional implementation, when the returning position is the position of the vacant storage space, the server first generates a goods taking path according to the position information and the first target object position included in the first transferring task; predicts a first total consumed duration for which the robot separately reaches positions corresponding to V vacant storage spaces to return goods and takes the first target object according to the goods taking path, where V is a natural number not less than U, and U is a natural number greater than 0; then records a difference between the first total consumed duration and a duration consumed when the robot takes the first target object according to the goods taking path as a first increased time; and Determines each of U vacant storage spaces whose first increased time is not greater than a first preset threshold in the V vacant storage spaces as the returning position of the second target object.

In this embodiment, the vacant storage space is selected according to an increased time for which the robot reaches the vacant storage spaces to perform the returning tasks and performs the goods taking tasks according to the goods taking path. The position corresponding to the vacant storage space whose increased time is not greater than the first preset threshold is used as the returning position of the second target object. Therefore, a vacant storage space that takes a relatively short time may be selected for the robot to return goods, to reduce the time consumed when the robot performs the second transferring task.

In a fourth optional implementation, when the returning position is the position of the vacant storage space, the server first generates a goods taking path according to the position information and the first target object position included in the first transferring task; predicts a first movement distance increased when the robot separately reaches positions corresponding to V vacant storage spaces to return goods and takes the first target object according to the goods taking path, where V is a natural number not less than U, and U is a natural number greater than 0; and determines each of U vacant storage spaces whose increased first movement distance is not greater than a second preset threshold in the V vacant storage spaces as the returning position of the second target object.

In this embodiment, the vacant storage space is selected according to the increased first movement distance by which the robot reaches the vacant storage spaces to perform the returning tasks and performs the goods taking tasks according to the goods taking path. The position corresponding to the vacant storage space whose increased first movement distance is not greater than the second preset threshold is used as the returning position of the second target object. Therefore, a relatively close vacant storage space may be selected for the robot to return goods, to reduce the traveling distance of the robot when performing the second transferring task.

It should be noted that, a quantity of returning tasks is not limited in this embodiment, and the robot may perform a plurality of returning tasks simultaneously. During execution of the returning task, a plurality of policies may be arranged for the returning position. One policy is taking and returning at the same place. Each of goods corresponds to a fixed storage position, and this mode can facilitate warehouse management. Therefore, during execution of the returning task, the returning position is an initial storage position of to-be-returned goods. The other policy is storing at an empty position. The to-be-returned goods may be placed at any vacant storage space, and this mode has greater flexibility. Therefore, during execution of the returning task, the returning position is a position corresponding to a vacant storage space. Another special case of this mode is that the goods taking task and the returning task may be combined, that is, storage spaces of to-be-returned goods and to-be-taken goods are exchanged. In this case, the returning position is a storage position corresponding to the to-be-taken goods.

For example, when the second transferring task is the goods taking task, and a total quantity of vacant slots indicated by the vacant slot information of the robot is zero, the server needs to allocate at least one first transferring task before the second transferring task is performed. For example, the robot is currently in a full load state, and tasks allocated by the server to the robot include the first transferring task and the second transferring task. Therefore, before performing the second transferring task, the robot performs at least one first transferring task, to acquire a vacant slot for placing the second target object acquired through the second transferring task.

When the second transferring task is the goods taking task and the total quantity of vacant slots indicated by the vacant slot information of the robot is greater than zero, the server determines a goods taking position of the second target object in the second transferring task according to the position information, the vacant slot information, and the first target object position included in the first transferring task.

For example, the server determining goods taking positions of N second target objects according to the position information and the first target object position included in the first transferring task, where N is a natural number greater than 0 but not greater than the total quantity of vacant slots indicated by the vacant slot information.

In a first optional implementation, the server may generate a returning path according to the position information and the first target object position included in the first transferring task; and determine N goods taking positions whose distances to the returning path are within a third preset range as the goods taking positions of the second target objects.

In this embodiment, a goods taking position that meets a requirement is selected according to the distances between goods taking positions of to-be-taken goods and the returning path, and the goods taking position whose distance to the returning path is within the third preset range is used as the goods taking position of the second target object. Therefore, a relatively close goods taking task may be received for the robot, to reduce the traveling distance of the robot when performing the second transferring task.

In a second optional implementation, the server determines N goods taking positions whose distances to the robot are within a fourth preset range as the goods taking positions of the second target objects.

In a third optional implementation, the server first generates a returning path according to the position information and the first target object position included in the first transferring task; predicts a second total consumed duration for which the robot separately reaches M goods taking positions to take goods and returns the first target object according to the returning path, where M is a natural number not less than N; records a difference between the second total consumed duration and a duration consumed when the robot returns the first target object according to the returning path as a second increased time; and determines N goods taking positions whose second increased time is not greater than a third preset threshold in the M goods taking positions as the goods taking positions of the second target objects.

In this embodiment, the goods taking position is selected according to an increased time for which the robot reaches the goods taking positions to perform the goods taking tasks and performs the returning tasks according to the returning path. A goods taking position whose increased time is within a preset range is used as the goods taking position of the second target object. Therefore, a goods taking task that takes a relatively short time may be received for the robot, to reduce the time consumed when the robot performs the second transferring task.

In a fourth optional implementation, the server generates a returning path according to the position information and the first target object position included in the first transferring task; predicts a second movement distance increased when the robot separately reaches M goods taking positions to take goods and returns the first target object according to the returning path, where M is a natural number not less than N; and determines N goods taking positions whose increased second movement distance is not greater than a fourth preset threshold in the M goods taking positions as the goods taking positions of the second target objects.

In this embodiment, the goods taking position is selected according to the second movement distance increased when the robot reaches the goods taking positions to perform the goods taking tasks and performs the returning tasks according to the returning path. The goods taking positions whose increased second movement distance is not greater than the second preset threshold are used as the goods taking positions of the second target objects. Therefore, a goods taking position with a relatively short traveling distance may be selected for the robot, to reduce the traveling distance of the robot when performing the second transferring task.

Specifically, when the first transferring task is the goods taking task, and the second transferring task is the returning task, the goods taking path may be generated according to a current position of the robot and a current goods taking position of the robot; and then one or more returning tasks may be received during performance of the goods taking task, to perform the operation of taking while returning. During specific operation, all vacant storage spaces whose distances to the goods taking path are within the preset range may be acquired, and then the most convenient vacant storage space that takes a shortest time is determined as a returning position corresponding to to-be-returned goods. A special case of this mode is that after the goods taking task is performed, the goods taking position also becomes a vacant storage space. Therefore, if the robot has a vacant slot when taking goods, the robot may directly perform a goods taking operation, and return, after taking the goods, to-be-returned goods on the robot to the vacant storage space vacated after the goods taking task is completed, that is, exchanges the storage spaces of the two goods. In this case, the robot does not need to perform extra movement, and the second increased time is the shortest. In addition, when the robot has no vacant slot, the robot may first find a vacant storage space to return goods. In this case, the robot has the vacant slot, and then exchanges storage spaces of to-be-taken goods and to-be-returned goods according to the foregoing embodiments.

For example, when generating the first transferring task and the second transferring task, the server may further consider any one or more of the following constraints: a total moving duration for which the robot completes the goods taking task and the returning task; a total quantity of times that a goods taking operation and a returning operation are performed when the robot completes the goods taking task and the returning task; a total traveling distance by which the robot completes the goods taking task and the returning task; and a goods loading rate when the robot completes the goods taking task and the returning task.

Specifically, when planned paths corresponding to the first transferring task and the second transferring task are generated, optimal paths may be generated according to the moving duration, the total quantity of times that the goods taking operation and the returning operation are performed, the traveling distance, the goods loading rate, and the like. Because goods are placed in a stereoscopic warehouse, both the plane position and the height (the goods position) are considered. During path planning, both a traveling time of the path and a lifting time of a fork need to be considered. The height of the fork may be adjusted during traveling of the robot, and the overall time for which the robot reaches a position of a target shelving unit and the fork reaches a specified position is the shortest. If a more optimized path (for example, a shorter distance or a shorter time) is found, the current path is updated, and a new planned path is generated.

In this embodiment, the position information and the vacant slot information of the robot are acquired when the robot performs the first transferring task; and the second transferring task is allocated to the robot according to the position information, the vacant slot information, and the first target object position included in the first transferring task, where one of the first transferring task and the second transferring task is the goods taking task, and the other is the returning task. Therefore, the transferring policy may be flexibly set, and goods are returned while goods are taken during goods transferring, to effectively improve the goods transferring efficiency.

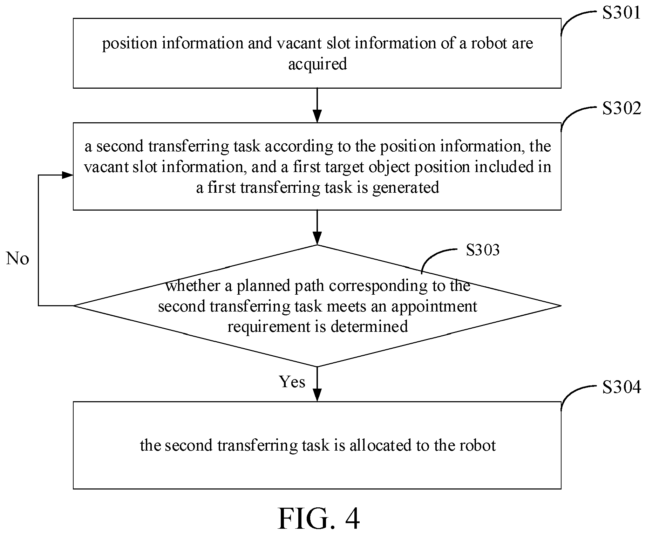

FIG. 4 is a schematic flowchart of a goods transferring method according to a third embodiment of this application. As shown in FIG. 4, the goods transferring method provided in this embodiment may include the following operations:
In block S301: position information and vacant slot information of a robot are acquired.

In block S302: a second transferring task according to the position information, the vacant slot information, and a first target object position included in a first transferring task is generated.

In block S303: whether a planned path corresponding to the second transferring task meets an appointment requirement is determined, where if the planned path meets the appointment requirement, operation in block S304 is performed; and if the planned path does not meet the appointment requirement, operation in block S302 is performed.

In block S304: the second transferring task is allocated to the robot.

In this embodiment, for a specific implementation process and an implementation principle of operation in block S301 and operation in block S302, reference is made to the related description of operation in block S201 and operation in block S202 shown in FIG. 3, and details are not described herein again.

In operation in block S303, after generating the second transferring task, the server further needs to determine whether the planned path corresponding to the second transferring task meets the appointment requirement, where the appointment requirement includes: no robot travels on the planned path within a preset time period.

Through the appointment mechanism, a collision may be prevented from occurring in the robot during traveling. Only when the appointment is successful, the robot can travel on a corresponding path, and another robot is not allowed to travel on the appointed path.

In this embodiment, before the second transferring task is delivered, it is determined whether the planned path corresponding to the second transferring task meets the appointment requirement. Only when the planned path meets the appointment requirement, the server is allowed to allocate the second transferring task to the robot. Therefore, the collision may be prevented from occurring in the robot during traveling, to ensure the safety of the robot.

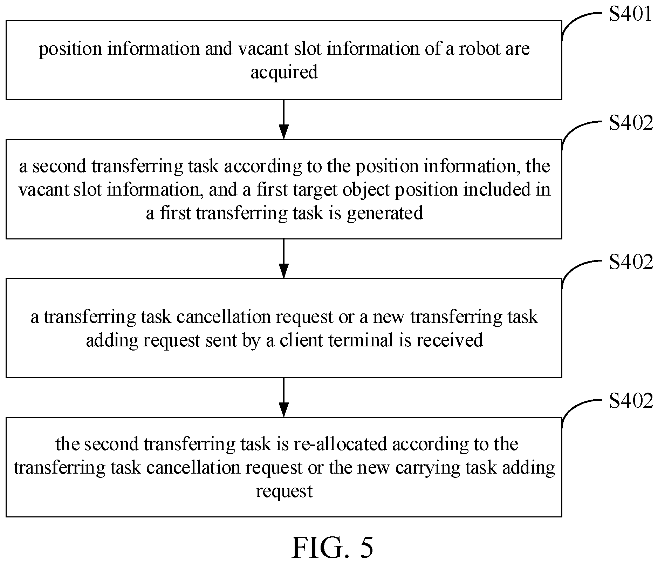

FIG. 5 is a schematic flowchart of a goods transferring method according to a fourth embodiment of this application. As shown in FIG. 5, the goods transferring method provided in this embodiment may include the following operations:
In block S401: position information and vacant slot information of a robot are acquired.

In block S402: a second transferring task according to the position information, the vacant slot information, and a first target object position included in a first transferring task is generated.

In this embodiment, for a specific implementation process and an implementation principle of step S401 and step S402, reference is made to the related description of step S201 and step S202 shown in FIG. 3, and details are not described herein again.

In block S403: a transferring task cancellation request or a new transferring task adding request sent by a client terminal is received.

In block S404: the second transferring task is re-allocated according to the transferring task cancellation request or the new transferring task adding request.

In this embodiment, the server may further receive a task change request sent by the client terminal and then re-allocate the second transferring task. The task change request includes the transferring task cancellation request and the new transferring task adding request. The transferring task cancellation request is used for deleting the returning task and/or the goods taking task. The new transferring task adding request is used for adding the returning task and/or the goods taking task.

For example, when receiving the transferring task cancellation request sent by the client terminal, the server may delete the returning task and/or the goods taking task according to the transferring task cancellation request; then generate a planned path corresponding to the second transferring task according to a path optimization parameter, a current position of the robot, returning positions corresponding to remaining returning tasks, and storage positions corresponding to remaining target objects; and deliver the planned path corresponding to the second transferring task to the robot.

For example, when receiving the new transferring task adding request sent by the client terminal, the server may add the returning task and/or the goods taking task according to the new transferring task adding request; then generate a planned path corresponding to the second transferring task according to a path optimization parameter, a current position of the robot, a returning position corresponding to the newly added returning task, and a storage position corresponding to a newly added target object; and deliver the planned path corresponding to the second transferring task to the robot.

In this embodiment, the task change request sent by the client terminal is received, and then the second transferring task is re-generated, so that the transferring task can be dynamically adjusted, to improve the goods transferring efficiency.

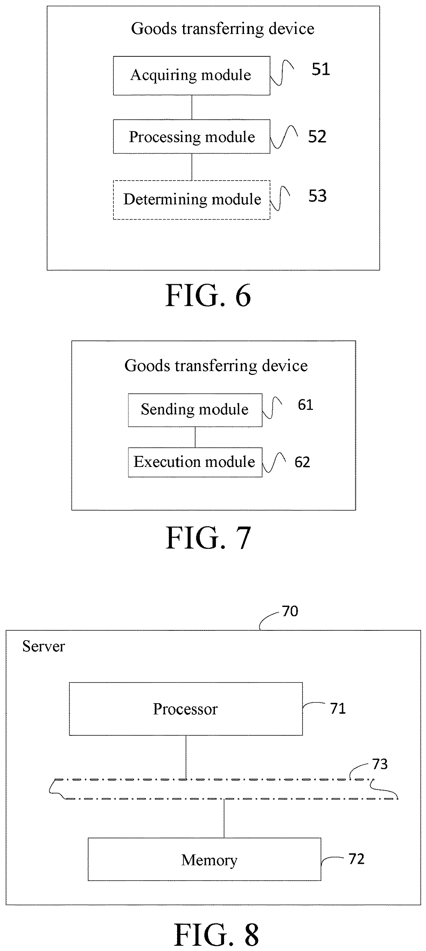

FIG. 6 is a schematic structural diagram of a goods transferring device according to a fifth embodiment of this application. As shown in FIG. 6, the goods transferring device provided in this embodiment may include:
an acquiring module 51, configured to acquire position information and vacant slot information of a robot; and
a processing module 52, configured to allocate a second transferring task to the robot according to the position information, the vacant slot information, and a first target object position included in a first transferring task, where one of the first transferring task and the second transferring task is the goods taking task, and the other is the returning task.

In some possible embodiments, when the second transferring task is the returning task, the processing module 52 is further configured to:
determine a returning position of a second target object in the second transferring task according to the position information and the first target object position included in the first transferring task.

In some possible embodiments, the processing module 52 is further configured to:
determine the returning position as an initial storage position of the second target object; or
determine the returning position as a position of the vacant storage space; or
determine the returning position as a position of the first target object.

In some possible embodiments, the processing module 52 is further configured to:
generate a goods taking path according to the position information and the first target object position included in the first transferring task; and
determine each of positions corresponding to U vacant storage spaces whose distances to the goods taking path are within a first preset range as the returning positions of the second target object, where U is a natural number greater than 0.

In some possible embodiments, the processing module 52 is further configured to:
determine each of positions corresponding to U vacant storage spaces whose distances to the robot are within a second preset range as the returning position of the second target object, where U is a natural number greater than 0.

In some possible embodiments, the processing module 52 is further configured to:
generate a goods taking path according to the position information and the first target object position included in the first transferring task;
predict a first total consumed duration for which the robot separately reaches positions corresponding to V vacant storage spaces to return goods and takes the first target object according to the goods taking path, where V is a natural number not less than U, and U is a natural number greater than 0; and
record a difference between the first total consumed duration and a duration consumed when the robot takes the first target obj ect according to the goods taking path as a first increased time; and
determine each U vacant storage spaces whose first increased time is not greater than a first preset threshold in the V vacant storage spaces as the returning position of the second target object.

In some possible embodiments, the processing module 52 is further configured to:
generate a goods taking path according to the position information and the first target object position included in the first transferring task;
predict a first movement distance increased when the robot separately reaches positions corresponding to V vacant storage spaces to return goods and takes the first target object according to the goods taking path, where V is a natural number not less than U, and U is a natural number greater than 0; and
determine each of U vacant storage spaces whose increased first movement distance is not greater than a second preset threshold in the V vacant storage spaces as the returning position of the second target object.

In some possible embodiments, when the second transferring task is the goods taking task, and a total quantity of vacant slots indicated by the vacant slot information of the robot is zero, the processing module is further configured to allocate at least one first transferring task before the second transferring task is performed. In some possible embodiments, the processing module 52 is further configured to:
determine, when the second transferring task is the goods taking task and the total quantity of vacant slots indicated by the vacant slot information of the robot is greater than zero, a goods taking position of a second target object in the second transferring task according to the position information, the vacant slot information, and the first target object position included in the first transferring task.

In some possible embodiments, the determining a goods taking position of the second target object from the second transferring task includes:
determining goods taking positions of N second target objects according to the position information and the first target object position included in the first transferring task, where N is a natural number greater than 0 but not greater than the total quantity of vacant slots indicated by the vacant slot information.

In some possible embodiments, the processing module 52 is further configured to:
generate a returning path according to the position information and the first target object position included in the first transferring task; and
determine N goods taking positions whose distances to the returning path are within a third preset range as the goods taking positions of the second target objects.

In some possible embodiments, the processing module 52 is further configured to:
determine N goods taking positions whose distances to the robot are within a fourth preset range as the goods taking positions of the second target objects.

In some possible embodiments, the processing module 52 is further configured to:
generate a returning path according to the position information and the first target object position included in the first transferring task;
predict a second total consumed duration for which the robot separately reaches M goods taking positions to take goods and returns the first target object according to the returning path, where M is a natural number not less than N;
record a difference between the second total consumed duration and a duration consumed when the robot returns the first target object according to the returning path as a second increased time; and
determine N goods taking positions whose second increased time is not greater than a third preset threshold in the M goods taking positions as the goods taking positions of the second target objects.

In some possible embodiments, the processing module 52 is further configured to:
generate a returning path according to the position information and the first target object position included in the first transferring task;
predict a second movement distance increased when the robot separately reaches M goods taking positions to take goods and returns the first target object according to the returning path, where M is a natural number not less than N; and
determine N goods taking positions whose increased second movement distance is not greater than a fourth preset threshold in the M goods taking positions as the goods taking positions of the second target objects.

In some embodiments, the goods transferring device further includes a determining module 53, configured to:
determine whether a planned path corresponding to the second transferring task meets an appointment requirement, where the appointment requirement includes: no robot travels on the planned path within a preset time period.

In some possible embodiments, the processing module 52 is further configured to:
re-allocate the second transferring task if the planned path does not meet the appointment requirement.

In some possible embodiments, the processing module 52 is further configured to:
receive a transferring task cancellation request or a new transferring task adding request sent by a client terminal; and
re-allocate the second transferring task according to the transferring task cancellation request or the new transferring task adding request.

In some possible embodiments, any one or more of the following constraints are considered when the first transferring task and the second transferring task are allocated:
a total moving duration for which the robot completes the goods taking task and the returning task;
a total quantity of times that a goods taking operation and a returning operation are performed when the robot completes the goods taking task and the returning task;
a total traveling distance by which the robot completes the goods taking task and the returning task; and
a goods loading rate when the robot completes the goods taking task and the returning task.

The goods transferring device provided in this embodiment may be configured to execute the technical solution in the method embodiment shown in FIG. 2, FIG. 3, and FIG. 4. The implementation principles and technical effects thereof are similar. Details are not described herein again.

In this embodiment, the position information and the vacant slot information of the robot are acquired; and the second transferring task is allocated to the robot according to the position information, the vacant slot information, and the first target object position included in the first transferring task, where one of the first transferring task and the second transferring task is the goods taking task, and the other is the returning task. Therefore, a transferring policy may be flexibly set, so that the robot can return goods while taking goods, to improve the rationality of path planning and reduce the entire operation time and movement distance of the robot, thereby not only saving energy, but also effectively improving the goods transferring efficiency.

FIG. 7 is a schematic structural diagram of a goods transferring device according to a sixth embodiment of this application. As shown in FIG. 7, the goods transferring device provided in this embodiment may include:
a sending module 61, configured to report position information and vacant slot information to a server, and acquire a transferring task sequence to perform a first transferring task; and
an execution module 62, configured to perform a second transferring task when the first transferring task is performed, where one of the first transferring task and the second transferring task is a goods taking task, and the other one is a returning task. The second transferring task is acquired when the first transferring task is performed, or the acquired transferring task sequence includes the second transferring task.

In some possible embodiments, when the second transferring task is the returning task, the execution module 62 is further configured to:
acquire a first target object position from the first transferring task, and acquire a returning position of a second target object from the second transferring task;
reach the returning position of the second target object to perform the returning task during traveling to the first target object position; and
travel to the first target object position to perform the goods taking task.

In some possible embodiments, the returning position of the second target object in the second transferring task includes:
an initial storage position of the second target object; or
a position of a vacant storage space; or
a position of the first target object.

In some possible embodiments, the execution module 62 is further configured to:
acquire positions corresponding to U vacant storage spaces from the second transferring task, where distances between the positions corresponding to the U vacant storage spaces and a goods taking path of the robot are within a first preset range, and U is a natural number greater than 0; and the goods taking path is generated according to the position information and the first target object position included in the first transferring task.

In some possible embodiments, the execution module 62 is further configured to:
acquire positions corresponding to U vacant storage spaces from the second transferring task, where distances between the positions corresponding to the U vacant storage spaces and the robot are within a second preset range, and U is a natural number greater than 0; and the goods taking path is generated according to the position information and the first target object position included in the first transferring task.

In some possible embodiments, the execution module 62 is further configured to:
acquire positions corresponding to U vacant storage spaces from the second transferring task, where a first increased time generated when the robot returns goods according to the positions corresponding to the U vacant storage spaces is not greater than a first preset threshold, and U is a natural number greater than 0.

In some possible embodiments, the execution module 62 is further configured to:
acquire positions corresponding to U vacant storage spaces from the second transferring task, where a first movement distance increased when the robot returns goods according to the positions corresponding to the U vacant storage spaces is not greater than a second preset threshold, and U is a natural number greater than 0.

In some possible embodiments, the execution module 62 is further configured to:
acquire a first target object position from the first transferring task, and acquire a goods taking position of a second target object from the second transferring task;
reach the goods taking position of the second target object to perform the goods taking task during traveling to the first target object position; and
travel to the first target object position to perform the returning task.

In some possible embodiments, the execution module 62 is further configured to:
acquire goods taking positions of N second target objects from the second transferring task, where distances between the goods taking positions of the N second target objects and a returning path are within a third preset range; and the returning path is generated according to the position information and the first target obj ect position included in the first transferring task.

In some possible embodiments, the execution module 62 is further configured to:
acquire goods taking positions of N second target objects from the second transferring task, where a second increased time generated when the robot takes goods according to the goods taking positions of the N second target objects is not greater than a second preset threshold, and N is a natural number greater than 0.

In some possible embodiments, the execution module 62 is further configured to:
acquire goods taking positions of N second target objects from the second transferring task, where distances between the goods taking positions of the N second target objects and the robot are within a fourth preset range; and the returning path is generated according to the position information and the first target object position included in the first transferring task.

In some possible embodiments, the first transferring task and the second transferring task are related to any one or more of the following constraints:
a total moving duration for which the robot completes the goods taking task and the returning task;
a total quantity of times that a goods taking operation and a returning operation are performed when the robot completes the goods taking task and the returning task;
a total traveling distance by which the robot completes the goods taking task and the returning task; and
a goods loading rate when the robot completes the goods taking task and the returning task.

The goods transferring device provided in this embodiment may be configured to execute the technical solution in the method embodiment shown in FIG. 5. The implementation principles and technical effects thereof are similar. Details are not described herein again.

In this embodiment, the position information and the vacant slot information are reported to the server during execution of the first transferring task; the second transferring task allocated by the server is received, where one of the first transferring task and the second transferring task is a goods taking task, and the other one is a returning task; and the second transferring task is performed when the first transferring task is performed. Therefore, a transferring policy may be flexibly set, so that the robot can return goods while taking goods, to improve the rationality of path planning and reduce the entire operation time and movement distance of the robot, thereby not only saving energy, but also effectively improving the goods transferring efficiency.

FIG. 8 is a schematic structural diagram of a server according to a seventh embodiment of this application. As shown in FIG. 8, a server 70 provided in this embodiment includes:
a processor 71; and
a memory 72, configured to store executable instructions of the processor, where the memory may further be a flash memory.

The processor 71 is configured to perform the steps in the foregoing method by executing the executable instructions. For details, refer to related descriptions in the foregoing method embodiment.

Optionally, the memory 72 may be independent or may be integrated with the processor 71.

When the memory 72 is a device independent of the processor 71, the server 70 may further include:
a system bus 73, configured to connect the processor 71 and the memory 72.

The server provided in this embodiment may be configured to execute the technical solution in the method embodiment shown in FIG. 2, FIG. 3, and FIG. 4. The implementation principles and technical effects thereof are similar. Details are not described herein again.

In this embodiment, the position information and the vacant slot information of the robot are acquired when the robot performs the first transferring task; and the second transferring task is allocated to the robot according to the position information, the vacant slot information, and the first target object position included in the first transferring task, where one of the first transferring task and the second transferring task is the goods taking task, and the other is the returning task. Therefore, a transferring policy may be flexibly set, so that the robot can return goods while taking goods, to improve the rationality of path planning and reduce the entire operation time and movement distance of the robot, thereby not only saving energy, but also effectively improving the goods transferring efficiency.

This embodiment further provides a robot, including: a robot body and a plurality of slots for placing goods arranged on the robot body, where the robot body further includes: a memory and a processor, where the memory is configured to store executable instructions of the processor; and the processor is configured to perform the goods transferring method shown in FIG. 5 by executing the executable instructions.

This embodiment further provides a warehousing system, including: a robot, a server, a shelving unit, and an operating platform, where the robot is communicatively connected to the server; the server is configured to perform the goods transferring method shown in FIG. 2, FIG. 3, and FIG. 4; and the robot is configured to perform the goods transferring method shown in FIG. 5, to implement goods transferring between the shelving unit and the operating platform.

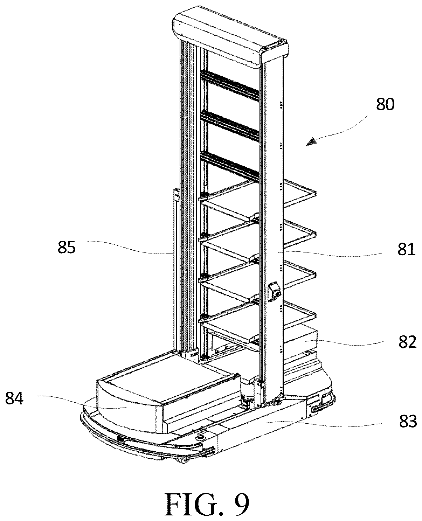

FIG. 9 is a schematic structural diagram of a robot according to an embodiment of this application. As shown in FIG. 9, a robot 80 includes a robot body 81, a base 83, a transferring device 84, an adjustment assembly 85, and a plurality of slots 82 arranged on the robot body 81. The adjustment assembly 85 is configured to drive the transferring device 84 to move up or down, so that the transferring device 84 is aligned with any slot 82 on the robot body 81 or a storage space of a warehouse shelving unit in which a corresponding target object is located. The transferring device 84 can rotate around the vertical direction as an axis to adjust an orientation, so as to be aligned with the slot 82 or the storage space on the warehouse shelving unit. The transferring device 84 is configured to load or unload the target object, to transfer the target object between the warehouse shelving unit and the slot.

The robot 80 in the foregoing embodiments may perform the goods transferring method shown in FIG. 5, to perform goods transferring between a shelving unit and an operating platform.

For example, the robot 80 receives a transferring task sent by the server and determines a traveling path according to a position of a target object in the transferring task. For example, during traveling to a first target object position, the robot first reaches a position of a second target object to perform the transferring task and then travels to the first target object position to perform the transferring task. It should be noted that, the transferring task may be a goods taking task or may be a returning task.

For example, when the robot 80 performs the returning task, a returning position of the target object may be an initial storage position of a target object in the returning task; or a position of a vacant storage space; or a storage position of a target object in the goods taking task.

For example, when the robot 80 performs the goods taking task, the robot 80 moves to the storage position of the target object in the goods taking task and transfers the target object in the goods taking task from a storage space on a shelving unit to a vacant slot on the robot body 81 through cooperation of the adjustment assembly 85 and the transferring device 84.

For example, when the robot 80 performs the returning task, the robot 80 moves to the storage position corresponding to the returning position and transfers the target object from a slot on the robot body 81 to a storage space on a shelving unit through cooperation of the adjustment assembly 85 and the transferring device 84. It should be noted that, the storage space on the shelving unit may be the initial storage position of the target object or the vacant storage space.

For example, when the target object does not need to be returned to the initial storage position of the target object, a manner for improving the efficiency is that a to-be-returned target object is removed from a slot on the robot body 81, and then the transferring device 84 is controlled through the adjustment assembly 85 to place the to-be-returned target object at a warehouse position vacated when a goods taking task is completed, that is, the warehouse position corresponding to the goods taking task and the warehouse position corresponding to the returning task are the same storage space. This manner may reduce a total traveling distance by which the robot performs the transferring task and reduce a total time consumed when the robot performs the transferring task.

FIG. 10 is a schematic structural diagram of a robot according to an embodiment of this application. As shown in FIG. 10, the robot provided in this embodiment of this application includes a movable base 1, a robot shelving unit 2, a lifting device, and an object transferring device. The movable base 1 is a support structure of the robot and configured to support and transfer other components and/or devices of the robot to walk. In this embodiment, the movable base 1 may transfer the robot shelving unit 2 and a target object placed on the robot shelving unit 2 to move in a warehouse region.

For example, the robot shelving unit 2 is mounted on the movable base 1; the movable base 1 is configured to move to a first target object position included in a first transferring task and move to a second target object position included in a second transferring task, where one of the first transferring task and the second transferring task is a goods taking task, and the other one is a returning task; the lifting device and the object transferring device are mounted on the robot shelving unit, and the lifting device is configured to drive the object transferring device to move up or down relative to the robot shelving unit; the object transferring device is configured to transfer a first target object between the robot shelving unit and the first target object position, the object transferring device is configured to transfer a second target object between the robot shelving unit and the second target object position; and the robot is configured to perform the second carrying task during performance of the first carrying task.

For example, when the second transferring task is the returning task, the movable base 1 reaches a returning position during traveling to the first target object position; and the object transferring device cooperates with the lifting device to transfer the second target object from the robot shelving unit to the returning position.

For example, the returning position is any one of an initial storage position of the second target object, a position of a vacant storage space, or a position of the first target object; and when the returning position is the position of the first target object, the object transferring device transfers the first target object to the robot shelving unit and then transfers the second target object to the position of the first target object.

For example, the object transferring device includes at least one transferring mechanism mounted on the robot shelving unit, and the transferring mechanism is configured to pick or place a target object.

For example, the object transferring device includes a suction-cup fork assembly and/or a machine-clamping arm.

For example, when the object transferring device includes at least two transferring mechanisms, the at least two transferring mechanisms are arranged in parallel or arranged in different layers in a lifting direction.

For example, when the at least two transferring mechanisms are arranged in parallel, the at least two transferring mechanisms are located on the robot shelving unit, and the at least two transferring mechanisms are an integrated structure.

For example, when the at least two transferring mechanisms are arranged in parallel, the robot shelving unit includes three or more columns arranged on the movable base in the same vertical plane; each transferring mechanism is mounted between two adjacent columns and moves up or down relative to the columns; and the transferring mechanisms are allowed or not allowed to move relative to each other.

For example, when the at least two transferring mechanisms are arranged in parallel, the lifting device includes two lifting assemblies, the two lifting assemblies are respectively mounted on two opposing sides of the robot shelving unit, two ends of the object transferring device are respectively connected to the two lifting assemblies, and the two lifting assemblies drive the object transferring device to move up or down relative to the robot shelving unit.

The structure of the robot shelving unit 2 is not specifically limited in this embodiment. For example, in a possible implementation, as shown in FIG. 10, the robot shelving unit 2 includes two columns vertically arranged on the movable base 1, and the transferring mechanisms 4 are mounted between the two columns and may move up or down relative to the columns.

Optionally, the robot shelving unit 2 includes three or more columns arranged on the movable base 1 in the same vertical plane, and each transferring mechanism 4 is mounted between two adjacent columns and moves up or down relative to the columns. The two transferring mechanisms located in the same layer may be designed into an integrated structure, that is, there is no relative movement between the transferring mechanisms in the same layer.

For example, when the at least two transferring mechanisms are arranged in different layers in the lifting direction, the transferring mechanisms are allowed or not allowed to move relative to each other.

For example, when the at least two transferring mechanisms are arranged in different layers in the lifting direction, the at least two transferring mechanisms are located on the robot shelving unit, and the at least two transferring mechanisms are an integrated structure.

For example, when the at least two transferring mechanisms are arranged in different layers in the lifting direction, the lifting device includes two lifting assemblies, the two lifting assemblies are respectively mounted on two opposing sides of the robot shelving unit, two ends of each of the transferring mechanisms are respectively connected to the two lifting assemblies, and the two lifting assemblies drive each of the transferring mechanisms to move up or down relative to the robot shelving unit.

For example, when there are two transferring mechanisms, one of the transferring mechanisms is configured to transfer a target object on a warehouse shelving unit to the robot shelving unit, and the other one of transferring mechanisms is configured to move a target object on the robot shelving unit to the warehouse shelving unit.

For example, when the robot performs the goods taking task, the robot travels to a goods taking position of the first target object; and
one of the transferring mechanisms in the object transferring device moves to the goods taking position of the first target object through the lifting device and takes out the first target object from the warehouse shelving unit and then places the first target object on the robot shelving unit.

For example, after the goods taking task for the first target object is performed, one of the at least one transferring mechanism in the object transferring device moves the second target object on the robot shelving unit to the goods taking position of the first target object through the lifting device, and pushes the second target object to the goods taking position of the first target object.

For example, when the robot performs the returning task, the robot travels to a returning position of the second target object; and one of the at least one transferring mechanism in the object transferring device moves the second target object on the robot shelving unit to the returning position of the second target object through the lifting device, and pushes the second target object to the returning position of the second target object.

For example, at least two storage spaces for storing target objects are arranged on the robot shelving unit.

For example, each transferring mechanism includes a temporary storage tray and two telescopic arms oppositely arranged on the temporary storage tray in parallel, inner arms of the telescopic arms include a transferring assembly, and the transferring assembly includes a push rod assembly and/or a clamping assembly.

The robot in this embodiment includes: the movable base, the robot shelving unit, the lifting device, and the object transferring device, where the robot shelving unit is mounted on the movable base; the movable base is configured to move to the first target object position included in the first transferring task and move to the second target object position included in the second transferring task, where one of the first transferring task and the second transferring task is the goods taking task, and the other is the returning task; and the lifting device and the object transferring device are mounted on the robot shelving unit, and the robot is configured to perform the second carrying task during performance of the first carrying task. Therefore, the transferring policy may be flexibly set, and goods are returned while goods are taken during goods transferring, to effectively improve the goods transferring efficiency.

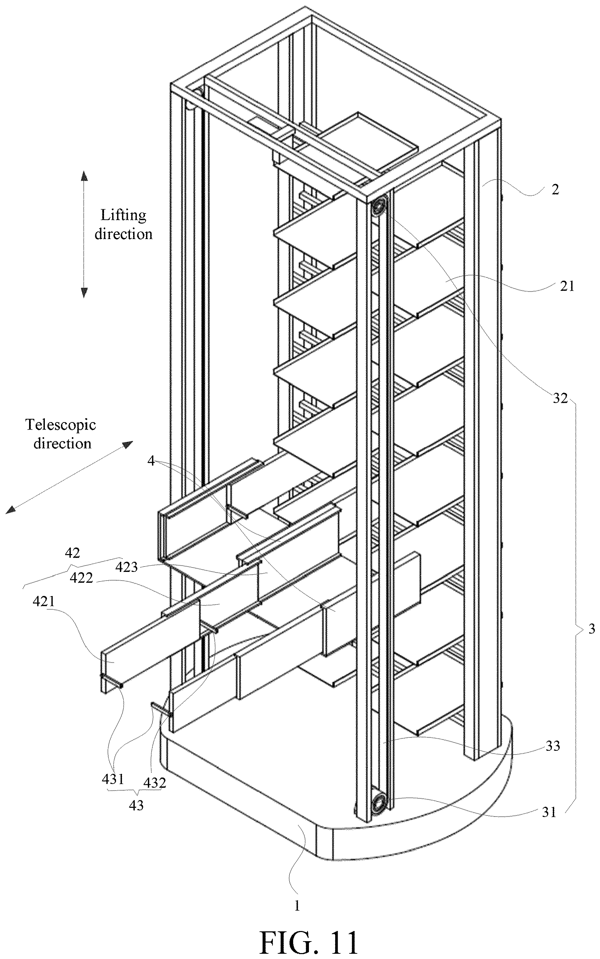

FIG. 11 is a second schematic structural diagram of a robot according to an embodiment of this application. As shown in FIG. 11, the robot shelving unit 2 includes four columns vertically arranged on the movable base 1. The four columns may enclose a cubic space, a plurality of partitions are set among the four columns, the plurality of partitions divide the cubic space into a plurality of storage spaces 21 for storing target objects, and one or more target objects may be placed on each storage space 21.

The lifting device and the object transferring device are mounted on the robot shelving unit 2, and the lifting device is configured to drive the object transferring device to move up or down relative to the robot shelving unit 2, so that the object transferring device is configured to transfer target objects in different heights.

Optionally, the lifting device generally includes two lifting assemblies 3. The two lifting assemblies 3 are respectively and oppositely mounted on two opposing sides of the robot shelving unit 2, for example, respectively mounted on two opposing columns close to the warehouse shelving unit. The object transferring device is located between the two lifting assemblies 3, two ends of the object transferring device are respectively connected to the two lifting assemblies 3, and the two lifting assemblies 3 drive the object transferring device to move up or down relative to the robot shelving unit 2.

Specifically, each of the lifting assemblies 3 includes a driving wheel 31, a driven wheel 32, and a transmission belt 33. The driving wheel 31 is mounted on the bottom end of the robot shelving unit 2, the driven wheel 32 is mounted on the top end of the robot shelving unit 2, and the transmission belt 33 is sleeved on the driving wheel 31 and the driven wheel 32. The driving wheel 31 may be connected to an output shaft of a motor, so that the motor drives the driving wheel 31 to rotate, the driving wheel 31 drives the transmission belt 33 to move, and the transmission belt 33 drives the object transferring device to move up or down. When the motor performs forward rotation or reverse rotation, the motor drives the driving wheel 31 to perform forward rotation or reverse rotation, and the transmission belt 33 drives the object transferring device to move up or down, so that the object transferring device is configured to take target objects at different positions or in different heights or place target objects at different positions of the warehouse shelving unit or on storage spaces in different heights.

For example, both the driving wheel 31 and the driven wheel 32 are pulleys, and the transmission belt 33 is a flat belt, an open-loop flat belt, or the like. In this way, the object transferring device is driven through belt transmission to move up or down relative to the robot shelving unit 2, and the structure is simple.

Based on the embodiments, to improve the transferring efficiency, the object transferring device includes at least two transferring mechanisms 4. The at least two transferring mechanisms 4 are arranged in the same layer and are connected into a whole and mounted on the robot shelving unit 2, and each transferring mechanism 4 is configured to pick or place a target object.

It may be understood that the at least two transferring mechanisms 4 represent that there are two or more transferring mechanisms 4.

For example, the object transferring device includes two transferring mechanisms 4 set in the same layer and connected together. For ease of description, in this embodiment, the two transferring mechanisms 4 are represented by a first transferring mechanism and a second transferring mechanism. The first transferring mechanism and the second transferring mechanism are set in the same layer and connected into a whole and mounted on the robot shelving unit 2. The first transferring mechanism and the second transferring mechanism may be connected by a mounting plate or the like, so that there is no relative movement between the first transferring mechanism and the second transferring mechanism.

Optionally, during execution of a transferring task, the first transferring mechanism and the second transferring mechanism may be configured to take different target objects from the warehouse shelving unit simultaneously, to implement a transferring policy of simultaneous taking; or may be configured to simultaneously place a plurality of target objects on different storage spaces on the warehouse shelving unit, to implement a transferring policy of simultaneous storage; or the first transferring mechanism is configured to take target objects on the warehouse shelving unit, and the second transferring mechanism is configured to place to-be-placed target objects on vacant storage spaces on the warehouse shelving unit, to implement a transferring policy of placing while taking. It may be understood that the vacant storage spaces on the warehouse shelving unit include vacant storage spaces vacated after the first transferring mechanism takes out the target objects. In this way, the robot may simultaneously perform a plurality of goods taking tasks, or simultaneously perform a plurality of storage tasks, or simultaneously perform goods taking tasks and storage tasks, so that the transferring efficiency of the robot can be improved, and the time consumed when the robot takes and places the target objects is reduced.

For example, when both the transferring tasks of the first transferring mechanism and the second transferring mechanism are the goods taking tasks, a goods taking path of the first transferring mechanism or the second transferring mechanism may be generated according to a current position of the robot and a position of a to-be-taken target object, and then one or more goods taking tasks of the other transferring mechanism 4 are added into the goods taking path, to achieve the purpose of simultaneously taking a plurality of target objects, thereby improving the transferring efficiency of the robot and reducing the time consumed by taking the target objects.

Alternatively, both the transferring tasks of the first transferring mechanism and the second transferring mechanism are placing target objects into the vacant storage spaces on the warehouse shelving unit. In this case, a storage path of the first transferring mechanism or the second transferring mechanism may be generated according to a current position of the robot and the position of the vacant storage space on the warehouse shelving unit in which the corresponding target object is placed, and then one or more storage tasks of the other transferring mechanism 4 are added into the path, to achieve the purpose of simultaneously placing a plurality of target objects, thereby improving the transferring efficiency of the robot and reducing the time consumed by placing the target objects.

Alternatively, the transferring task of the first transferring mechanism is the goods taking task, and the transferring task of the second transferring mechanism is the storage task. In this case, a goods taking path may be generated according to a current position of the robot and a position of a target object to be taken by the first transferring mechanism, and then one or more storage tasks of the second transferring mechanism are added into the goods taking path, to implement the transferring policy of taking while placing, thereby improving the transferring efficiency of the robot and reducing the time consumed by placing and taking the target objects.

It should be noted that, the transferring task of the first transferring mechanism may alternatively be the storage task, the transferring task of the second transferring mechanism may be the goods taking task, and the transferring principle is the same as that in the foregoing embodiment. Details are not described herein again.

In an embodiment, the transferring task of the first transferring mechanism is the goods taking task, and the transferring task of the second transferring mechanism is the storage task. After the first transferring mechanism takes out a target object, the second transferring mechanism places a to-be-placed target object into a vacant storage space vacated after the first transferring mechanism performs goods taking. In this case, the robot only needs to move in the horizontal direction, to align the second transferring mechanism with the vacant storage space vacated after the first transferring mechanism performs goods taking, and the robot does not need to move too much in other paths with the shortest time consumed by placing the target object and the highest transferring efficiency.

Further, the transferring mechanism 4 includes a temporary storage tray 41 and telescopic arms 42 mounted on the temporary storage tray 41. The temporary storage tray 41 is configured to temporarily place goods that are moved between the warehouse shelving unit and the robot shelving unit 2. The temporary storage tray 41 may be a structure such as a metal plate or a non-metal plate placed horizontally. The telescopic arms 42 are mounted on the temporary storage tray 41, and the telescopic arms 42 may move in a telescopic direction, so that the telescopic arms 42 are configured to pull a target object on the warehouse shelving unit or the robot shelving unit 2 to the temporary storage tray 41 or push a target object on the temporary storage tray 41 to the warehouse shelving unit or the robot shelving unit 2.

Optionally, there are two telescopic arms 42, and the two telescopic arms 42 are oppositely arranged on two sides of the temporary storage tray 41 in parallel. The target object on the warehouse shelving unit or the robot shelving unit 2 is pulled to the temporary storage tray 41, or the target object on the temporary storage tray 41 is pushed to the vacant storage space on the warehouse shelving unit or the storage space 21 on the robot shelving unit 2 jointly through the two telescopic arms 42.

In a possible embodiment, the telescopic arms 42 include outer arms 423, inner arms 421, and a transferring assembly. Optionally, the transferring assembly may be a push rod assembly 43. The outer arms 423 are mounted on the temporary storage tray 41, the inner arms 421 are mounted on the outer arms 423, and the push rod assembly 43 is mounted on the inner arms 421. The inner arms 421 may move relative to the outer arms 423. In this way, the inner arms 421 drive the push rod assembly 43 to move, so that the push rod assembly 43 can drive the target object to move.

That is, the outer arms 423, the inner arms 421 mounted on the outer arms 423, and the push rod assembly 43 mounted on the inner arms 421 are arranged on two opposing sides of the temporary storage tray 41.

The push rod assembly 43 includes first push rods 431, where the first push rods 431 are mounted on the front end surface of the inner arms 421. The front end of the inner arm 421 is one end close to the warehouse shelving unit. Because there are two telescopic arms 42, and the two telescopic arms are oppositely arranged on the temporary storage tray 41 in parallel, there are also two inner arms, the two inner arms are oppositely set in parallel, and both the first push rods 431 are arranged on the front end surface of the two inner arms 421. The two first push rods 431 may rotate simultaneously to horizontal positions and are oppositely set or the two first push rods 431 simultaneously rotate to vertical positions.

Optionally, the transferring assembly may be the clamping assembly. The transferring assembly clamps a target object and is driven through the inner arms 421 to move, so as to transfer the target object. The clamping assembly is mounted in the inner side of the inner arms 421 and retractable in opposite directions, or the telescopic arm 42 is designed into retractable in opposite directions, to form a structure that can clamp or release the target object. In the corresponding example of the structure of the robot of this application, the transferring assembly is also applicable to the design of the same and similar transferring mechanisms such as the push rod assembly 43, the clamping assembly, the machine-clamping arm, and the suction-cup fork assembly, and this is not limited.

When the target object on the warehouse shelving unit needs to be taken out, the object transferring device first moves up or down to the temporary storage tray 41 and is flush with a storage space of the to-be-taken target object, and the inner arms 421 move towards the target object. In this case, the first push rods 431 on the inner arms 421 are in a vertical state. When the front end of the inner arms 421 is moved to the rear end of the target object, the first push rods 431 rotate to a horizontal state, and the first push rods 431 abut against the rear end surface of the target object. In this case, the inner arms 421 move towards the temporary storage tray 41, and the first push rods 431 push the target object to move towards the temporary storage tray 41, so that the target object is carried from the warehouse shelving unit to the temporary storage tray 41. When the target object on the temporary storage tray 41 needs to be placed onto the warehouse shelving unit, the first push rods 431 push the front end of the target object, and the inner arms 421 move towards the warehouse shelving unit, to push the target object to a vacant storage space on the warehouse shelving unit. The front end of the target object is one end close to the temporary storage tray 41, and one end opposite to the front end of the target object is the rear end of the target object.

Further, the push rod assembly 43 further includes second push rods 432. The second push rods 432 are mounted on the rear end surface of the inner arms 421 and may rotate relative to the rear end surface of the inner arms 421 to horizontal or vertical positions, so that the second push rods 432 push a target object on the temporary storage tray 41 to the robot shelving unit 2, or push a target object on the robot shelving unit 2 to the temporary storage tray 41.

Specifically, when the target object on the corresponding storage space 21 on the robot shelving unit 2 needs to be carried to the temporary storage tray 41, the second push rods 432 are first in a vertical state, and the inner arms 421 move towards the robot shelving unit 2. When the front end surface of the inner arms 421 is moved to the rear end surface of the target object, the second push rods 432 rotate to a horizontal state, and the second push rods 432 abut against the rear end surface of the target object. In this case, the inner arms 421 move towards the temporary storage tray 41, and the second push rods 432 push the target object to move towards the temporary storage tray 41, to move the target object to the temporary storage tray 41. When the target object on the temporary storage tray 41 needs to be carried to the corresponding storage space 21 on the robot shelving unit 2, the second push rods 432 abut against the front end of the target object, and the inner arms 421 drive the second push rods 432 to move towards the storage space 21 on the robot shelving unit 2, to push the target object on the temporary storage tray 41 to the corresponding storage space 21.

Based on the foregoing embodiments, to extend a telescopic path of the telescopic arm 42, the telescopic arm 42 further includes at least one middle arm 422. The middle arm 422 is mounted between the inner arm 421 and the outer arm 423 and is connected to the inner arm 421 and the outer arm 423. The middle arm 422 may move relative to the outer arm 423, and the inner arm 421 may move relative to the middle arm 422. The telescopic arm 42 may be provided with a plurality of middle arms 422 between the inner arm 421 and the outer arm 423 according to the telescopic length, to increase the movement path of the telescopic arm, so as to pick or place a target object of a relatively large size.

Further, the push assembly further includes a driving member, where the driving member is respectively connected to the first push rod 431 and the second push rod 432, and the driving member is configured to drive the first push rod 431 and the second push rod 432 to rotate relative to the end surfaces of the inner arms 421, so that the first push rod 431 and the second push rod 432 rotate to the horizontal or vertical position.

In the robot provided in the embodiments of this application, the object transferring device includes at least two transferring mechanisms, the transferring mechanisms are set in the same layer and connected into a whole. When a transferring work is performed by using the robot, the transferring mechanisms may simultaneously perform a plurality of transferring tasks, to implement a transferring policy of simultaneous taking, simultaneous placement, or placing while taking, thereby improving the transferring efficiency and reducing the time consumed by placing and taking the target object.

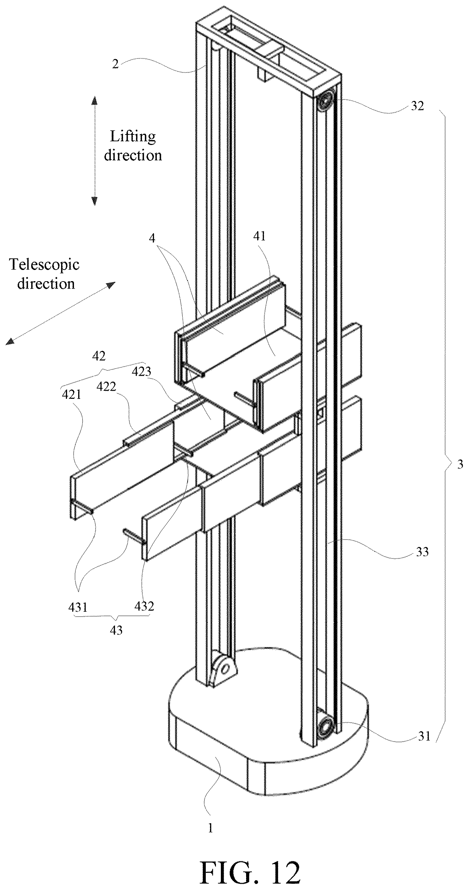

FIG. 12 is a third schematic structural diagram of a robot according to an embodiment of this application. As shown in FIG. 12, the robot provided in this embodiment of this application includes a movable base 1, a robot shelving unit 2, a lifting device, and at least two transferring mechanisms 4. The movable base 1 is a support structure of the robot and configured to support and transfer other components and/or devices of the robot to walk. In this embodiment, the robot shelving unit 2 is fixedly mounted on the movable base 1. In this way, the movable base 1 may transfer the robot shelving unit 2 and a target object placed on the robot shelving unit 2 to move in a warehouse region.

The structure of the robot shelving unit 2 is not specifically limited in this embodiment. For example, in a possible implementation, as shown in FIG. 10, the robot shelving unit 2 includes two columns vertically arranged on the movable base 1, and the transferring mechanisms 4 are mounted between the two columns and may move up or down relative to the columns.

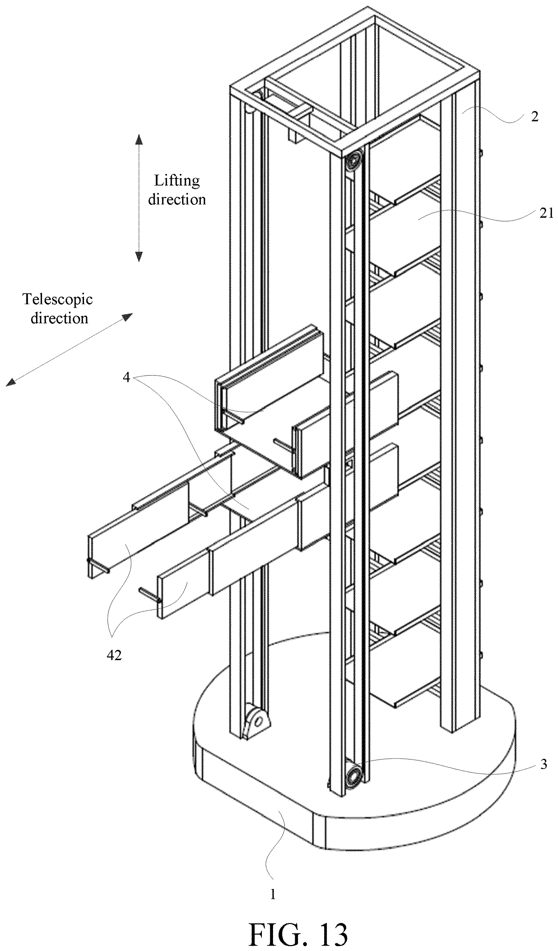

FIG. 13 is a fourth schematic structural diagram of a robot according to an embodiment of this application. As shown in FIG. 13, the robot shelving unit 2 includes four columns vertically arranged on the movable base 1. The four columns may enclose a cubic space, a plurality of partitions are set among the four columns, the plurality of partitions divide the cubic space into a plurality of storage spaces 21 for storing target objects, and one or more target objects may be placed on each storage space 21.

It may be understood that the at least two transferring mechanisms 4 represent that there are two or more transferring mechanisms 4. In an embodiment, there are two transferring mechanisms 4, and the two transferring mechanisms 4 may be connected into a whole by connection plates.

The lifting device and the two or more transferring mechanisms 4 are mounted on the robot shelving unit 2, and the lifting device is configured to drive the transferring mechanisms 4 to move up or down relative to the robot shelving unit 2, so that the transferring mechanisms 4 are configured to transfer target objects in different heights. Optionally, the lifting device generally includes two lifting assemblies 3. The two lifting assemblies 3 are respectively and oppositely mounted on two opposing sides of the robot shelving unit 2, for example, respectively mounted on two opposing columns close to the warehouse shelving unit. The transferring mechanisms 4 are located between the two lifting assemblies 3, two ends of each of the transferring mechanisms 4 are respectively connected to the two lifting assemblies 3, and the lifting assemblies drive the transferring mechanisms 4 to move up or down relative to the robot shelving unit 2.

Specifically, each of the lifting assemblies 3 includes a driving wheel 31, a driven wheel 32, and a transmission belt 33. The driving wheel 31 is mounted on the bottom end of the robot shelving unit 2, the driven wheel 32 is mounted on the top end of the robot shelving unit 2, and the transmission belt 33 is sleeved on the driving wheel 31 and the driven wheel 32. The driving wheel 31 may be connected to an output shaft of a motor, so that the motor drives the driving wheel 31 to rotate, the driving wheel 31 drives the transmission belt 3 to move, and the transmission belt 3 drives the transferring mechanisms 4 to move up or down. When the motor performs forward rotation or reverse rotation, the motor drives the driving wheel 31 to perform forward rotation or reverse rotation, and the transmission belt 33 drives the transferring mechanisms 4 to move up or down, so that the transferring mechanisms 4 are configured to take target objects in different heights or place target objects on storage spaces in different heights on the warehouse shelving unit.

Based on the foregoing embodiments, to improve the transferring efficiency, the two or more transferring mechanisms 4 are set in different layers in the lifting direction. When a transferring work is performed by using the robot, the transferring mechanisms may simultaneously perform a plurality of transferring tasks, to implement a transferring policy of simultaneous taking, simultaneous placement, or placing while taking, thereby improving the transferring efficiency and reducing the time consumed by placing and taking the target object.

For example, there are two transferring mechanisms 4, and the two transferring mechanisms 4 are set in different layers in the lifting direction. For ease of description, in this embodiment, the two transferring mechanisms 4 are represented by a first transferring mechanism and a second transferring mechanism. The first transferring mechanism and the second transferring mechanism are arranged on the robot shelving unit 2 in different layers in the lifting direction.

During execution of a transferring task, the first transferring mechanism and the second transferring mechanism may be configured to take different target objects from the warehouse shelving unit simultaneously; or may be configured to simultaneously place a plurality of target objects on different storage spaces on the warehouse shelving unit; or the first transferring mechanism is configured to take target objects on the warehouse shelving unit, and the second transferring mechanism is configured to place to-be-placed target objects on vacant storage spaces on the warehouse shelving unit. It may be understood that the vacant storage spaces on the warehouse shelving unit include vacant storage spaces vacated after the first transferring mechanism takes out the target objects. In this way, the robot may simultaneously perform a plurality of goods taking tasks, or simultaneously perform a plurality of storage tasks, or simultaneously perform goods taking tasks and storage tasks, so that the transferring efficiency of the robot can be improved, and the time consumed when the robot takes and places the target objects is reduced.

For example, when both the transferring tasks of the first transferring mechanism and the second transferring mechanism are the goods taking tasks, a goods taking path of the first transferring mechanism or the second transferring mechanism may be generated according to a current position of the robot and a position of a to-be-taken target object, and then one or more goods taking tasks of the other transferring mechanism 4 are added into the goods taking path, to achieve the purpose of simultaneously taking a plurality of target objects, thereby improving the transferring efficiency of the robot and reducing the time consumed by taking the target objects.

Alternatively, both the transferring tasks of the first transferring mechanism and the second transferring mechanism are placing target objects into the vacant storage spaces on the warehouse shelving unit. In this case, a storage path of the first transferring mechanism or the second transferring mechanism may be generated according to a current position of the robot and the position of the vacant storage space on the warehouse shelving unit in which the corresponding target object is placed, and then one or more storage tasks of the other transferring mechanism 4 are added into the path, to achieve the purpose of simultaneously placing a plurality of target objects, thereby improving the transferring efficiency of the robot and reducing the time consumed by placing the target objects.

Alternatively, the transferring task of the first transferring mechanism is the goods taking task, and the transferring task of the second transferring mechanism is the storage task. In this case, a goods taking path may be generated according to a current position of the robot and a position of a target object to be taken by the first transferring mechanism, and then one or more storage tasks of the second transferring mechanism are added into the goods taking path, to implement a transferring policy of taking while placing, thereby improving the transferring efficiency of the robot and reducing the time consumed by placing and taking the target objects.

It should be noted that, the transferring task of the first transferring mechanism may alternatively be the storage task, the transferring task of the second transferring mechanism may be the goods taking task, and the transferring principle is the same as that in the foregoing embodiment. Details are not described herein again.

In an embodiment, the transferring task of the first transferring mechanism is the goods taking task, and the transferring task of the second transferring mechanism is the storage task. After the first transferring mechanism takes out a target object, the second transferring mechanism places a to-be-placed target object into a vacant storage space vacated after the first transferring mechanism performs goods taking. In this case, the second transferring mechanism only needs to move in the lifting direction, and the robot does not need to move too much in other paths with the shortest time consumed by placing the target object and the highest transferring efficiency.

Further, the transferring mechanism 4 includes a temporary storage tray 41 and telescopic arms 42 mounted on the temporary storage tray 41. The temporary storage tray 41 is configured to temporarily place goods that are moved between the warehouse shelving unit and the robot shelving unit 2. The temporary storage tray 41 may be a structure such as a metal plate or a non-metal plate placed horizontally. The telescopic arms 42 are mounted on the temporary storage tray 41, and the telescopic arms 42 may move close to or away from the target object, so that the telescopic arms 42 are configured to pull a target object on the warehouse shelving unit or the robot shelving unit 2 to the temporary storage tray 41 or push a target object on the temporary storage tray 41 to the warehouse shelving unit or the robot shelving unit 2.

Optionally, there are two telescopic arms 42, and the two telescopic arms 42 are oppositely arranged on two sides of the temporary storage tray 41. The target object on the warehouse shelving unit or the robot shelving unit 2 is pulled to the temporary storage tray 41, or the target object on the temporary storage tray 41 is pushed to the vacant storage space on the warehouse shelving unit or the storage space 21 on the robot shelving unit 2 jointly through the two telescopic arms 42.

In a possible embodiment, the telescopic arms 42 include outer arms 423, inner arms 421, and a push rod assembly 43. The outer arms 423 are mounted on the temporary storage tray 41, the inner arms 421 are mounted on the outer arms 423, and the push rod assembly 43 is mounted on the inner arms 421. The inner arms 421 may move relative to the outer arms. In this way, the inner arms 421 drive the push rod assembly 43 to move, so that the push rod assembly 43 can drive the target object to move.

The push rod assembly 43 includes first push rods 431, where the first push rods 431 are mounted on the front end surface of the inner arms 421. The front end of the inner arm 421 is one end close to the warehouse shelving unit. It may be understood that in the two oppositely set telescopic arms in parallel, both the first push rods 431 are arranged on the front end surface of the two opposing inner arms 421, and the two first push rods 431 may rotate simultaneously to horizontal positions and are oppositely set or the two first push rods 431 simultaneously rotate to vertical positions.

When the target object on the warehouse shelving unit needs to be taken out, each transferring mechanism first moves up or down along with the lifting assemblies in the lifting direction to the temporary storage tray 41 and is flush with a storage space of the to-be-taken target object, and the inner arms 421 move towards the target object. In this case, the first push rods 431 on the inner arms 421 are in a vertical state. When the front end of the inner arms 421 is moved to the rear end of the target object, the first push rods 431 rotate to a horizontal state, and the first push rods 431 abut against the rear end surface of the target object. In this case, the inner arms 421 move towards the temporary storage tray 41, and the first push rods 431 push the target object to move towards the temporary storage tray 41, so that the target object is carried from the warehouse shelving unit to the temporary storage tray 41. When the target object on the temporary storage tray 41 needs to be placed onto the warehouse shelving unit, the first push rods 431 push the front end of the target object, and the inner arms 421 move towards the warehouse shelving unit, to push the target object to a vacant storage space on the warehouse shelving unit. The front end of the target object is one end close to the temporary storage tray 41, and one end opposite to the front end of the target object is the rear end of the target object.

Further, the push rod assembly 43 further includes second push rods 432. The second push rods 432 are mounted on the rear end surface of the inner arms 421 and may rotate relative to the rear end surface of the inner arms 421 to horizontal or vertical positions, so that the second push rods 432 push a target object on the temporary storage tray 41 to the robot shelving unit 2, or push a target object on the robot shelving unit 2 to the temporary storage tray 41.

Specifically, when the target object on the corresponding storage space 21 on the robot shelving unit 2 needs to be carried to the temporary storage tray 41, the second push rods 432 are first in a vertical state, and the inner arms 421 move towards the robot shelving unit 2. When the front end surface of the inner arms 421 is moved to the rear end surface of the target object, the second push rods 432 rotate to a horizontal state, and the second push rods 432 abut against the rear end surface of the target object. In this case, the inner arms 421 move towards the temporary storage tray 41, and the second push rods 432 push the target object to move towards the temporary storage tray 41, to move the target object to the temporary storage tray 41. When the target object on the temporary storage tray 41 needs to be carried to the corresponding storage space 21 on the robot shelving unit 2, the second push rods 432 abut against the front end of the target object, and the inner arms 421 drive the second push rods 432 to move towards the storage space 21 on the robot shelving unit 2, to push the target object on the temporary storage tray 41 to the corresponding storage space 21.

Based on the foregoing embodiments, to extend a telescopic path of the telescopic arm 42, the telescopic arm 42 further includes at least one middle arm 422. The middle arm 422 is mounted between the inner arm 421 and the outer arm 423 and is connected to the inner arm 421 and the outer arm 423. The middle arm 422 may move relative to the outer arm 423, and the inner arm 421 may move relative to the middle arm 422. The telescopic arm 42 may be provided with a plurality of middle arms 422 between the inner arm 421 and the outer arm 423 according to the telescopic length, so that the telescopic arms 42 may push the target object to a further position, or push the target object at a further position to the temporary storage tray 41 or the robot shelving unit 2.

Further, the push assembly 43 further includes a driving member, where the driving member is respectively connected to the first push rod 431 and the second push rod 432, and the driving member is configured to drive the first push rod 431 and the second push rod 432 to rotate relative to the end surfaces of the inner arms 421, so that the first push rod 431 and the second push rod 432 rotate to the horizontal or vertical position.

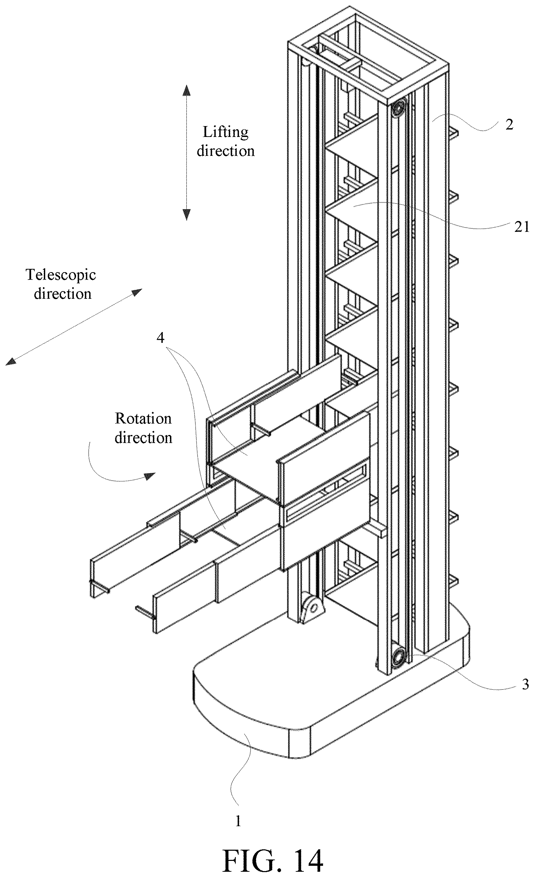

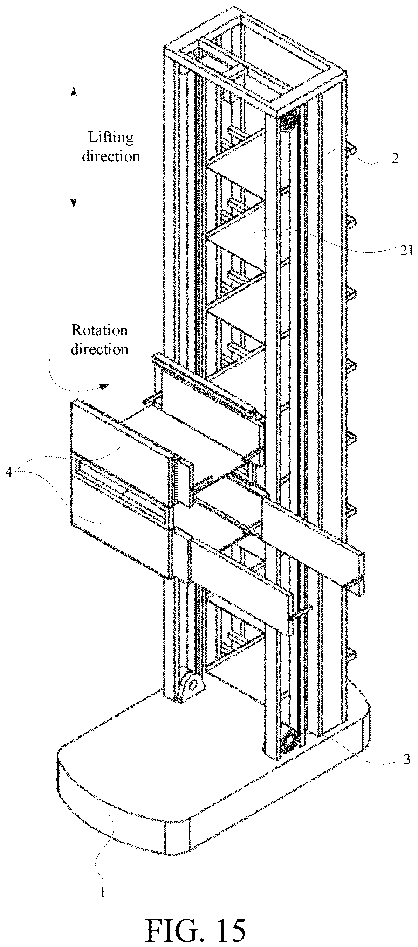

FIG. 14 is a fifth schematic structural diagram of a robot according to an embodiment of this application. FIG. 15 is a sixth schematic structural diagram of a robot according to an embodiment of this application. Based on the foregoing embodiments, the robot provided in this embodiment of this application further includes a support beam. The support beam is mounted on the robot shelving unit 2 and may move up or down relative to the robot shelving unit 2. The transferring mechanisms 4 are mounted on the support beam, so that the transferring mechanisms 4 move up or down relative to the robot shelving unit 2 along with the support beam.

The robot further includes a mounting frame (not shown in the figure) and a rotary assembly (not shown in the figure) mounted on the mounting frame. The transferring mechanisms 4 are mounted on the rotary assembly, the mounting frame is mounted on the support beam, and the rotary assembly is configured to drive the transferring mechanisms 4 to rotate within a plane perpendicular to a lifting direction of the support beam, so that the transferring mechanisms 4 may rotate to different directions.

The mounting frame includes two mounting plates that are set opposite to each other and a bearing beam that connects the two mounting plates, where the two mounting plates are connected to the support beam. The rotary assembly includes a bearing plate mounted on the bearing beam, a rotation plate spaced apart from the bearing plate, and a cross bearing configured to connect the bearing plate and the rotation plate, where the cross bearing is connected to a first chain wheel, the rotation plate is provided with a second chain wheel and a motor that drives the second chain wheel to rotate, the first chain wheel and the second chain wheel are connected by a chain, when the motor drives the second chain wheel to rotate, the second chain wheel drives the first chain wheel to rotate through the chain, and the first chain wheel drives the transferring mechanisms 4 on the rotation plate to rotate around an axis of the first chain wheel during rotation, so that the at least two transferring mechanisms 4 rotate to different directions within the plane perpendicular to the lifting direction of the support beam.

The robot provided in this embodiment of this application includes a robot shelving unit and two or more transferring mechanisms mounted on the robot shelving unit, and the transferring mechanisms are set in different layers in a lifting direction. When a transferring work is performed by using the robot, the transferring mechanisms may simultaneously perform a plurality of transferring tasks, to implement a transferring policy of simultaneous taking, simultaneous placement, or placing while taking, thereby improving the transferring efficiency and reducing the time consumed by placing and taking the target object.

This embodiment further provides a readable storage medium, storing a computer program, where when at least one processor of the server executes the computer program, the server performs the method provided in the foregoing implementations.

This embodiment further provides a program product, including a computer program, where the computer program is stored in a readable storage medium. At least one processor of the server may read the computer program from the readable storage medium, and the at least one processor executes the computer program, to cause the server to implement the method provided in the foregoing implementations.

Finally, it should be noted that the foregoing embodiments are merely used for describing the technical solutions of this application, but are not intended to limit this application. Although this application is described in detail with reference to the foregoing embodiments, a person of ordinary skill in the art is to understand that, modifications may still be made to the technical solutions in the foregoing embodiments, or equivalent replacements may be made to some or all of the technical features; and these modifications or replacements will not cause the essence of corresponding technical solutions to depart from the scope of the technical solutions in the embodiments of this application.

## Claims

1. A robot, comprising: a movable base, a robot shelving unit, a lifting device, and an object transferring device, wherein
the robot shelving unit is mounted on the movable base;
the movable base is configured to move to a first target object position comprised in a first transferring task and move to a second target object position comprised in a second transferring task, wherein one of the first transferring task and the second transferring task is a goods taking task, and the other one is a returning task;
the lifting device and the obj ect transferring device are mounted on the robot shelving unit, and the lifting device is configured to drive the object transferring device to move up or down relative to the robot shelving unit;
wherein the obj ect transferring device is configured to transfer a first target obj ect between the robot shelving unit and the first target object position, the object transferring device is configured to transfer a second target object between the robot shelving unit and the second target object position; and
wherein the robot is configured to perform the second carrying task during performance of the first carrying task.

2. The robot according to claim 1, wherein when the second transferring task is the returning task, the movable base reaches a returning position during traveling to the first target object position; and the object transferring device cooperates with the lifting device to transfer the second target object from the robot shelving unit to the returning position.

3. The robot according to claim 2, wherein the returning position is any one of an initial storage position of the second target object, a position of a vacant storage space, and a position of the first target object; and when the returning position is the position of the first target object, the object transferring device transfers the first target object to the robot shelving unit and then transfers the second target object to the position of the first target object.

4. The robot according to claim 1, wherein the object transferring device comprises at least one transferring mechanism mounted on the robot shelving unit, and the transferring mechanism is configured to pick or place a target object.

5. The robot according to claim 4, wherein the object transferring device comprises a suction-cup fork assembly and/or a machine-clamping arm.

6. The robot according to claim 4, wherein when the object transferring device comprises at least two transferring mechanisms, the at least two transferring mechanisms are arranged in parallel or arranged in different layers in a lifting direction.

7. The robot according to claim 6, wherein when the at least two transferring mechanisms are arranged in parallel, the at least two transferring mechanisms are located on the robot shelving unit, and the at least two transferring mechanisms are an integrated structure.

8. The robot according to claim 6, wherein when the at least two transferring mechanisms are arranged in parallel, the robot shelving unit comprises three or more columns arranged on the movable base in a same vertical plane; each transferring mechanism is mounted between two adjacent columns and moves up or down relative to the columns; and the transferring mechanisms are allowed or not allowed to move relative to each other.

9. The robot according to claim 6, wherein when the at least two transferring mechanisms are arranged in parallel, the lifting device comprises two lifting assemblies, wherein the two lifting assemblies are respectively mounted on two opposing sides of the robot shelving unit, two ends of the object transferring device are respectively connected to the two lifting assemblies, and the two lifting assemblies drive the object transferring device to move up or down relative to the robot shelving unit.

10. The robot according to claim 6, wherein when the at least two transferring mechanisms are arranged in different layers in the lifting direction, the transferring mechanisms are allowed or not allowed to move relative to each other.

11. The robot according to claim 6, wherein when the at least two transferring mechanisms are arranged in different layers in the lifting direction, the at least two transferring mechanisms are located on the robot shelving unit, and the at least two transferring mechanisms are an integrated structure.

12. The robot according to claim 6, wherein when the at least two transferring mechanisms are arranged in different layers in the lifting direction, the lifting device comprises two lifting assemblies, wherein the two lifting assemblies are respectively mounted on two opposing sides of the robot shelving unit, two ends of each of the transferring mechanisms are respectively connected to the two lifting assemblies, and the two lifting assemblies drive each of the transferring mechanisms to move up or down relative to the robot shelving unit.

13. The robot according to claim 4, wherein when there are two transferring mechanisms, one of the transferring mechanisms is configured to transfer a target object on a warehouse shelving unit to the robot shelving unit, and the other one of the transferring mechanisms is configured to move a target object on the robot shelving unit to the warehouse shelving unit.

14. The robot according to any one of claims 4 to 13, wherein when the robot performs the goods taking task, the robot travels to a goods taking position of the first target object; and
one of the at least one transferring mechanism in the object transferring device moves to the goods taking position of the first target object through the lifting device and takes out the first target object from the warehouse shelving unit and then places the first target object on the robot shelving unit.

15. The robot according to claim 14, wherein after the goods taking task for the first target object is performed, one of the at least one transferring mechanism in the object transferring device moves the second target object on the robot shelving unit to the goods taking position of the first target object through the lifting device, and pushes the second target object to the goods taking position of the first target object.

16. The robot according to any one of claims 4 to 13, wherein when the robot performs the returning task, the robot travels to a returning position of the second target object; and
one of the at least one transferring mechanism in the object transferring device moves the second target object on the robot shelving unit to the returning position of the second target object through the lifting device, and pushes the second target object to the returning position of the second target object.

17. The robot according to any one of claims 4 to 13, wherein at least two storage spaces for storing target objects are arranged on the robot shelving unit.

18. The robot according to any one of claims 4 to 13, wherein each transferring mechanism comprises a temporary storage tray and two telescopic arms oppositely arranged on the temporary storage tray in parallel, inner arms of the telescopic arms comprise a transferring assembly, and the transferring assembly comprises a push rod assembly and/or a clamping assembly.

19. A goods transferring method, applicable to the robot according to any one of claims 1 to 18, wherein the method comprises:
acquiring a transferring task sequence to perform the first transferring task; and
performing the second transferring task when the first transferring task is performed, wherein one of the first transferring task and the second transferring task is a goods taking task, and the other one is a returning task, and
wherein the second transferring task is acquired during execution of the first transferring task, or the acquired transferring task sequence comprises the second transferring task.

20. The method according to claim 19, wherein the robot periodically or aperiodically reports at least one piece of information of position information and vacant slot information to a server.

21. The method according to claim 19, wherein when receiving a requirement of a server, the robot reports at least one piece of information of position information and vacant slot information to the server.

22. The method according to claim 19, wherein when the second transferring task is the returning task, the performing the second transferring task when the first transferring task is performed comprises:
acquiring a first target object position from the first transferring task, and acquiring a returning position of a second target object from the second transferring task;
reaching the returning position of the second target object to perform the returning task during traveling to the first target object position; and
traveling to the first target object position to perform the goods taking task.

23. The method according to claim 22, wherein the returning position of the second target object in the second transferring task comprises:
an initial storage position of the second target object; or
a position of a vacant storage space; or
a position of the first target object.

24. The method according to claim 23, wherein the acquiring a returning position of a second target object from the second transferring task comprises:
acquiring positions corresponding to U vacant storage spaces from the second transferring task, wherein distances between the positions corresponding to the U vacant storage spaces and a goods taking path of the robot are within a first preset range, and/or distances between the positions corresponding to the U vacant storage spaces and the robot are within a second preset range; U is a natural number greater than 0; and the goods taking path is generated according to the position information and the first target object position comprised in the first transferring task.

25. The method according to claim 23, wherein the acquiring a returning position of a second target object from the second transferring task comprises:
acquiring positions corresponding to U vacant storage spaces from the second transferring task, wherein a first increased time generated when the robot returns goods according to the positions corresponding to the U vacant storage spaces is not greater than a first preset threshold, and/or a first movement distance increased when the robot returns goods according to the positions corresponding to the U vacant storage spaces is not greater than a second preset threshold; and U is a natural number greater than 0.

26. The method according to claim 19, wherein when the second transferring task is the goods taking task, the performing the second transferring task when the first transferring task is performed comprises:
acquiring a first target object position from the first transferring task, and acquiring a goods taking position of a second target object from the second transferring task;
reaching the goods taking position of the second target object to perform the goods taking task during traveling to the first target object position; and
traveling to the first target object position to perform the returning task.

27. The method according to claim 26, wherein the acquiring a goods taking position of a second target object from the second transferring task comprises:
acquiring goods taking positions of N second target objects from the second transferring task, wherein distances between the goods taking positions of the N second target objects and a returning path are within a third preset range, and/or distances between the goods taking positions of the N second target objects and the robot are within a fourth preset range; N is a natural number greater than 0; and the returning path is generated according to the position information and the first target object position comprised in the first transferring task.

28. The method according to claim 26, wherein the acquiring a goods taking position of a second target object from the second transferring task comprises:
acquiring goods taking positions of N second target objects from the second transferring task, wherein a second increased time generated when the robot takes goods according to the goods taking positions of the N second target objects is not greater than a third preset threshold, and/or a second movement distance increased when the robot takes goods according to the goods taking positions of the N second target objects is not greater than a fourth preset threshold, and N is a natural number greater than 0.

29. The method according to any one of claims 19 to 28, wherein the first transferring task and the second transferring task are related to any one or more of the following constraints:
a total moving duration for which the robot completes the goods taking task and the returning task;
a total quantity of times that a goods taking operation and a returning operation are performed when the robot completes the goods taking task and the returning task;
a total traveling distance by which the robot completes the goods taking task and the returning task; and
a goods loading rate when the robot completes the goods taking task and the returning task.

30. The method according to any one of claims 19 to 28, wherein when a shelving unit for placing goods has two or more storage positions in a depth direction of the shelving unit, and a target object position indicated by the goods taking task or the returning task is a second position or a position after the second position among the storage positions, the method further comprises:
transferring non-target goods placed before the target object position to a vacant slot of the robot;
performing the goods taking task or the returning task for the target object position; and
returning the non-target goods to an original storage position of the non-target goods on the shelving unit, or returning the non-target goods to a vacant storage position, wherein the vacant storage position and the target object position belong to a same shelving unit or different shelving units.

31. The method according to any one of claims 19 to 28, further comprising:
receiving a tally task allocated by the server, wherein the tally task comprises: performing goods sorting on target objects, and/or adjusting storage positions of the target objects; and
performing the tally task, wherein an execution occasion of the tally task comprises any one of the following cases:
before the first transferring task and the second transferring task;
between the first transferring task and the second transferring task;
after the first transferring task and the second transferring task; and
during execution of any task in a task sequence formed by the first transferring task and the second transferring task.

32. A server, comprising:
a processor; and
a memory, configured to store executable instructions of the processor, wherein
the processor is configured to allocate a first transferring task and a second transferring task for the robot according to any one of claims 1 to 18 by executing the executable instructions.

33. A warehousing system, comprising: the robot according to any one of claims 1 to 18, the server according to claim 32, a shelving unit, and an operating platform, wherein the robot is communicatively connected to the server;
the server allocates the first transferring task and the second transferring task to the robot; and
the robot performs the goods transferring method according to any one of claims 19 to 31, to implement goods transferring between the shelving unit and the operating platform.

34. A storage medium, having a computer program stored thereon, wherein when the program is executed by a processor, the goods transferring method according to any of claims 19 to 31 is implemented.
